(19) Europäisches Patentamt
European Patent Office
Office européen des brevets

(11) **EP 2 596 475 B1**

(12) **EUROPEAN PATENT SPECIFICATION**

(45) Date of publication and mention
of the grant of the patent:
**16.01.2019 Bulletin 2019/03**

(51) Int Cl.:
***G06T 15/00*** *(2011.01)*

(21) Application number: **10759870.8**

(22) Date of filing: **24.09.2010**

(86) International application number:
**PCT/EP2010/064154**

(87) International publication number:
**WO 2012/010220 (26.01.2012 Gazette 2012/04)**

(54) **FILLING DISOCCLUSIONS IN A VIRTUAL VIEW**

AUSFÜLLEN VON AUFGEDECKTEN BEREICHEN IN EINER VIRTUELLEN ANSICHT

REMPLISSAGE DE DÉSOCCLUSIONS DANS UNE VUE VIRTUELLE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **19.07.2010 US 365651 P**

(43) Date of publication of application:
**29.05.2013 Bulletin 2013/22**

(73) Proprietor: **Fraunhofer-Gesellschaft zur
Förderung der
angewandten Forschung e.V.
80686 München (DE)**

(72) Inventors:
• **KÖPPEL, Martin**
**10369 Berlin (DE)**
• **NDJIKA-NYA, Patrick**
**13505 Berlin (DE)**
• **DOSHKOV, Dimitar**
**10405 Berlin (DE)**
• **LAKSHMAN, Haricharan**
**10557 Berlin (DE)**
• **MERKLE, Philipp**
**10245 Berlin (DE)**
• **MÜLLER, Karsten**
**12437 Berlin (DE)**
• **WIEGAND, Thomas**
**14195 Berlin (DE)**

(74) Representative: **Schenk, Markus et al
Schoppe, Zimmermann, Stöckeler
Zinkler, Schenk & Partner mbB
Patentanwälte
Radlkoferstrasse 2
81373 München (DE)**

(56) References cited:
• **CRIMINISI A ET AL: "Efficient Dense Stereo with
Occlusions for New View-Synthesis by
Four-State Dynamic Programming",
INTERNATIONAL JOURNAL OF COMPUTER
VISION, KLUWER ACADEMIC PUBLISHERS, BO,
vol. 71, no. 1, 1 June 2006 (2006-06-01), pages
89-110, XP019410163, ISSN: 1573-1405, DOI:
10.1007/S11263-006-8525-1**
• **Ismaël Daribo: "Coding and rendering of 3D video
sequences and applications to
Three-Dimensional Television (3DTV) and Free
Viewpoint Television (FTV)", , 2009, XP55057434,
Ph.D. Dissertation at Graduate College of
Telecom ParisTech Retrieved from the Internet:
URL:http://hvrl.ics.keio.ac.jp/daribo/Cont
ent/Research/Thesis/these_daribo_v15.pdf**

**Description**

The present invention relates to filling disocclusions in a virtual view, such as a virtual view video or virtual view image.

The popularity of 3D video, free viewpoint television and 3D displays is growing significantly and many 3D video products are currently entering the mass market [13]. Autostereoscopic displays provide a 3D perception without the need to wear additional glasses. Such a display shows many slightly different views (e.g. 5, 8, 9 or 22) at the same time. However, due to the physical limitation of cameras and the bandwidth of communication channels, only a limited number of original views can be stored and transmitted. Hence, the need to render additional "virtual" views arises, in order to support autostereoscopic multi-view displays.

Depth-image-based rendering (DIBR) is a technology for synthesizing novel realistic images at a slightly different view perspective, using a textured image and its associated depth values. A critical problem is that the regions occluded by foreground (FG) objects in the original view may become visible in the synthesized view. In the literature, two basic options are described, addressing this problem. Either the missing image regions may be replaced by plausible color information [14] or the depth map is preprocessed in a way that no disocclusions appear in the rendered image [11]. One disadvantage of existing approaches is that they support only small baselines for rendering. Furthermore, most approaches render the new images frame by frame, ignoring the temporal correlation of the filled area [14], [11].

An appropriate technique to fill missing image regions with known information is texture synthesis [15], [16]. This method operates in parametric [17] or non-parametric [15], [18] modes. Although parametric methods are faster, non-parametric methods result in better visual quality [19].

In general, when new views are generated by 3D projection, the 3D geometry of the original scene and the camera positions have to be known in the form of camera parameters or projection matrices. Using the same, image contents may then be projected from the original camera views with the help of the associated depth information first of all into the 3D space and then into a new image [1]. In case of a (horizontally) rectified camera setup, the projection becomes simpler insofar as image contents only have to be shifted along the image line. According to the epipolar geometry, image points are always shifted along epipolar lines [2]. The epipolar geometry describes the geometric connection between two perspective views of the same 3D scene. The main finding here is that corresponding image points lie on a so-called epipolar line, which may be determined independent of the camera calibration. With rectified image pairs, the same are horizontal, parallel and correspond to the pixel lines.

A great challenge for the synthesis of new views is the generation of exposures. Areas, which are hidden in the original images may become visible in the newly synthesized view. This is a problem, in particular in the extrapolation of additional views outside the area of the original views. While, in the interpolation of intermediate views [3], [4], [5], exposed background or edge areas are usually visible in an original camera, this is not the case in the extrapolation. Currently, there are two basic approaches how to deal with such exposures:

The missing image areas are filled with suitable color information, or

the depth map is preprocessed so that exposures may not occur any more or remain negligible.

The methods of the first group deal with exposures by dividing the regions around the exposure area into foreground and background. The image points or pixels associated with the background are subsequently used to fill the unknown areas [3], [5]. In this respect, frequently interpolation or inpainting algorithms [6], [7] are used, which induce blurs in the unknown regions, however. Frequently, also the background pixel directly adjacent to the exposed area is respectively repeated for each line (pixel repetition) to replace the unknown image points [8]. These methods have the disadvantage that when synthesizing patterned backgrounds and vertical edges, interfering artifacts may occur [9]. The patch-based inpainting algorithm of [15] has been modified [26] by adding depth information in order to give higher priority to background pixels over the foreground ones.

In the second approach, a low pass filter is used for preprocessing the depth maps. In this respect, a Gaussian low pass filter [10], [11] or an asymmetric filter [12] may be used. This way, large depth leaps may be smoothed. Here, no or very small holes result in the warped image. However, the foreground objects are geometrically distorted by smoothing the depth information, which may be perceived as visually disturbing in the new view [10], [11], [12].

Likewise, methods were developed, representing a combination of the two approaches. Cheng et al [14] preprocess the depth mask at first by using a bilateral filter and subsequently fill in the exposed area pixel by pixel from the background data. Thus, artifacts of both approaches result, these have a reduced visual form than the artifacts of the individual basic methods.

With DIBR methods in the prior art, holes are generally only filled image by image. The DIBR approaches, which extrapolate new views apart from original camera positions, may only compensate small baselines, as the occurring artifacts in the exposed areas would otherwise be perceived as strongly disturbing by the viewer.

Present auto stereoscopic displays have a relatively small display area, e.g. 130 mm with a typical 9 view display. Thus, an image pair for the observer only comprises a quarter of a conventional baseline of 65 mm, so that also the perceived depth impression is reduced. The reason for the smaller distance of two neighboring images is the guarantee of a fluent passage between image pairs with horizontal head movements of the user. Exposures occurring with such baselines may be compensated using the classical DIBR method with good visual results.

If, in the future, the number of views e.g. increases to 50, the area of view is already approximately 800 mm. If it is assumed that all views have to be generated from two original camera views, the outermost "virtual" view is at a distance of approximately 390 mm from the original. Such baselines may not be compensated by the DIBR method according to the prior art without strong visual artifacts.

Future auto stereoscopic displays, just like present displays, are to present passages between the individual views fluently, and also be capable of representing the original depth impression, however (approx. 65 mm). Thus, an observer would, e.g., see the views 3 and 7 and when he moves his head, e.g. change over to views 4 and 8.

Therefore, there is a need for an efficient scheme for filling disocclusions in a virtual view such as a virtual view image or video which offers occlusion filling in a visibly plausible manner at reasonable efforts.

Accordingly, it is an object of the present invention to provide a disocclusion filling scheme for virtual views enabling occlusion filling at a better trade-off between visible plausibility and effort.

This object is achieved by the independent claims of the present application.

Preferred embodiments of the present invention are described by the dependent claims and with respect to the drawings which show

Fig. 1        a block diagram of an apparatus for filling disocclusions in a virtual view video in accordance with an embodiment;

Fig. 2        a schematic diagram showing the enlarged partial view of the actual virtual view image of Fig. 1 for illustrating a filtering process before filling depth/disparity map information within a disoccluded area in accordance with an embodiment;

Fig. 3        a schematic diagram showing the enlarged partial view of the current virtual view image of Fig. 1 for illustrating the texture patch direction in accordance with an embodiment as well as illustrating the occurrence of holes remaining after a pre-filling by copying from the background sprite image in accordance with an embodiment;

Fig. 4        a schematic diagram showing a partial view of Fig. 3 for illustrating the pre-assignment of texture information to sample positions within hole 44 in accordance with an embodiment;

Fig. 5        a schematic diagram also showing the partial view of Fig. 4 for illustrating the patch-based texture synthesis in accordance with an embodiment;

Fig. 6        a block diagram of an apparatus for filling a disoccluded area in a virtual view video in accordance with a further embodiment;

Fig. 7        a block diagram of a occlusion filling approach according to an embodiment . First, disocclusions in the DM are filled. Next, the BG sprite is updated with original BG data and the holes in the current picture are filled from the BG sprite. Then, the remaining holes are initialized and refined with texture synthesis. Finally, the BG sprite is updated with the new synthesized texture.

Fig. 8        results for frame 1 of the "Newspaper" sequence for the DM and texture filling approach of Fig. 7. (a) DM with disoccluded area marked black (filling direction given by white arrows). (b) Result of DM filling approach. (c) Line-wise filling of DM without blob removal. (d) Original reference image. (e) Result of the approach. (f) Result of MPEG VSRS.

Fig. 9.       DIBR results for the "Book arrival" sequence. (a) Original reference image. (b) Warped image with uncovered area marked black. (c) Final BG sprite with unknown area marked with white hachures and its associated DM (d). (e) Result of picture 51 by the approach. (f) Result of MPEG VSRS for the same picture. (g) and (h) Magnified results. Left, approach according to Fig. 1 and right, MPEG VSRS. (i) and (j) objective results for all frames of the sequence.

Fig. 10       Block diagram of a further approach in occlusion filling in accordance with a further embodiment. First, disocclusions in the DM are filled. Then the holes are initialized and refined with texture synthesis.

Fig. 11 Objective results for the "Book arrival", "Lovebird1" and "Newspaper" sequences. (a), (c), (e) PSNR for all pictures of the sequence measured locally in the defected area. (b), (d), (f) SSIM for all pictures of the sequence measured for the entire image.

Fig. 12 DIBR results for the sequence "Book arrival". (a) Original reference image. (b) Warped image with uncovered area marked black. (c) Result of picture 1 by MPEG VSRS. (d) Result of the approach according to an embodiment for the same picture. (e) and (f) Magnified results. Left, MPEG VSRS. Right, the approach according to an embodiment.

Fig. 13 DIBR results for the sequence "Lovebird1". (a) Original reference image. (b) Warped image with uncovered area marked black. (c) Result of picture 116 by MPEG VSRS. (d) Result of the approach according to an embodiment for the same picture. (e) and (f) Magnified results. Left, MPEG VSRS. Right, the approach according to an embodiment.

In the following, a temporally consistent concept of filling Disocclusions with texture synthesis for depth-image-based rendering is described, or, in other words, a occlusion filling scheme of a first alternative.

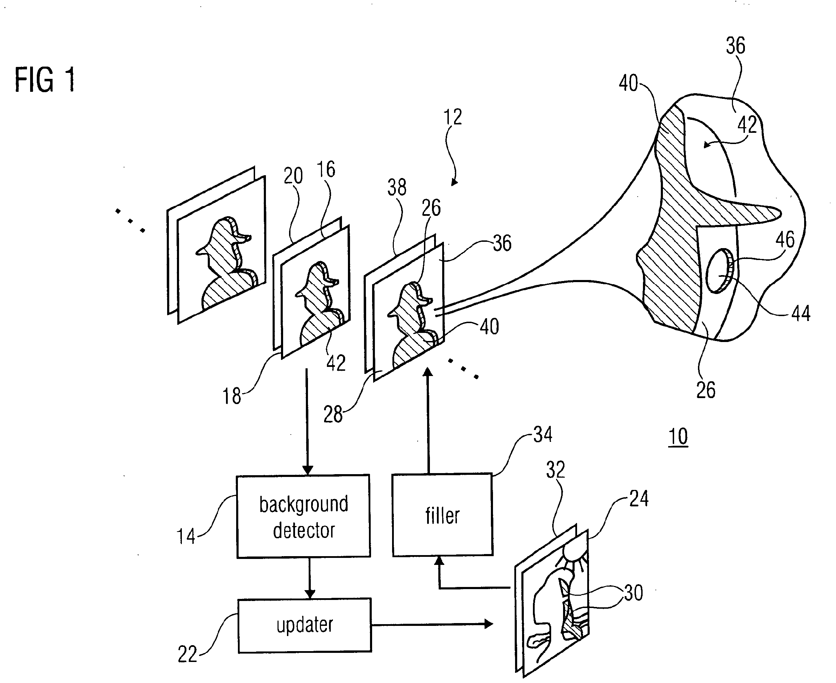

Fig. 1 shows an apparatus 10 for filling disocclusions in a virtual view video 12. The apparatus comprises a background detector 14 configured to identify a background portion 16 of a first virtual view image 18 of the virtual view video 12 based on a depth/disparity map 20 associated with the first virtual view image 18. Further, the apparatus 10 comprises an updater 22 configured to update a background sprite image 24 based on the background portion 16 of the first virtual view image 18, and a filler 34 configured to fill a disoccluded area 26 of a second virtual view image 28 of the virtual view video 12 based on a corresponding portion 30 of the background sprite image 24.

As will become more clear from the following discussion, the background sprite image 24 may also have a depth/disparity map 32 associated therewith which is, according to an embodiment, updated by updater 22 by the disparity/depth map 20 (laterally) at the background portion 16 or, in other words, by the part of the disparity/depth map 20 co-located with the background portion 16.

The background detector 14 may be configured to determine the background portion 16 by statistically evaluating a distribution of depth/disparity sample values of the depth/disparity map 20 to obtain a depth/disparity threshold and assigning portions of the first virtual view image 18 - and the depth/disparity map, respectively - to the background portion 16 where depth/disparity sample values have a predetermined relationship to the depth/disparity threshold such as being farer away from the view point. The evaluation of the distribution of depth/disparity sample values of the depth/disparity map may be global for the image, and the a depth/disparity threshold may be the median. Naturally, the depth-disparity threshold may be determined dependent on, without necessarily being equal to, another measure for the central tendency of the distribution of the depth-disparity sample values.

Although not explicitly mentioned above, the background detector 14, the updater 22 and the filler 34, continuously process the sequence of images of the video 12, and each of the images 28 may have a depth/disparity map associated therewith. Accordingly, the background detector 14 may also identify a background portion of the second virtual view image 28 based on a depth/disparity map 38 associated with the second virtual view image 28. Further, in identifying the background portion 36 of the first/second virtual view image, the background detector 14 may separate the first/second virtual view image 18, 28 into the background portion 16 and 36, respectively, and a foreground portion 40 and 42, respectively, thereof.

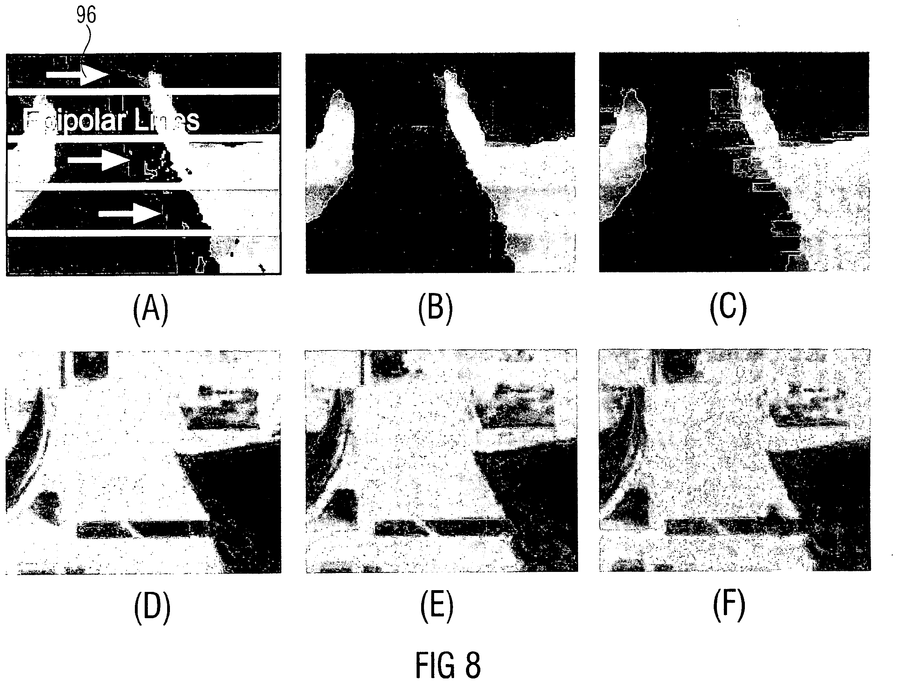

The filler 34 may be configured to fill the depth/disparity map 38 associated with the second virtual view image 28 locally within the disoccluded area thereof by extrapolating depth/disparity information of the depth/disparity map 38 extending along a portion of a circumference of the disoccluded area 26 of the second virtual view image 28 bordering the background portion 36 of the second virtual view image 28 - in Fig. 8, this is the left hand side portion of the disoccluded area 26 - into the disoccluded area 26 of the second virtual view image 26 or the corresponding depth/disparity map, respectively.

It is noted that the term "disoccluded area" shall equally apply to the corresponding image itself, as well as to the associated depth/disparity map in order to denote the co-located area in both.

The filler 34 may be configured to filter, before extrapolation, the depth/disparity information of the depth/disparity map 38 extending along a portion of a circumference of the disoccluded area of the second virtual view image bordering the background portion of the second virtual view image. The filtering may involve, for a predetermined location, locally determining a background centroid and a foreground centroid in a local statistical distribution of the depth/disparity information - in the following embodiments realized by 2-means clustering -, maintaining the depth/disparity information at the predetermined location in case same belongs to the background centroid and changing the depth/disparity information at the predetermined location to correspond to a depth/disparity value of the background centroid, in case the depth/disparity information belongs to the foreground centroid. In other words, the filler 34 may locally analyze the distribution of depth/disparity values for points along the border from the disoccluded area 26 to the background portion 36, which is likely to be bimodal, and determine a depth/disparity threshold between both modi, so as to determine as to whether the depth/disparity value at the current point should be changed to correspond to the modus of the background or not.

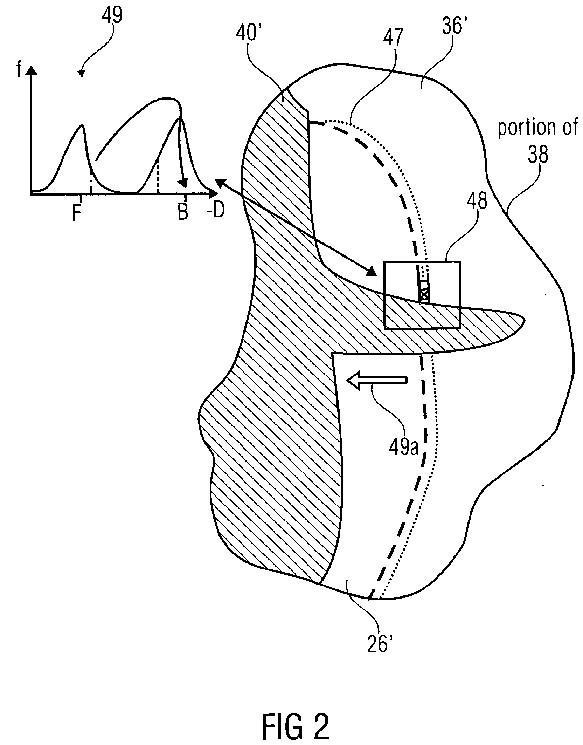

See, for example, Fig. 2 illustrating the filter process in more detail. Fig. 2 shows the portion of depth/disparity map 28 locally corresponding to the portion of image 36 which is shown in an enlarged manner in Fig. 1. Accordingly, the portion of the depth/disparity map 38 shown in Fig. 2 is also separated into a background portion 36', a foreground portion 40' and a disoccluded area 26' locally corresponding to the respective portions visible in the enlarged partial view of image 36 shown in Fig. 1. Fig. 2 shows the portion of the circumference of the disoccluded area 26 and 26' bordering the background portion 36' by dotted lines in order to differentiate this portion from the portion of the circumference of the disoccluded area 26' bordering the foreground portion 40' which is indicated by solid lines. As indicated by dotted line 47 extending in parallel to the dashed line portion of the circumference of the disoccluded area 26', filler 34 may perform the filtering merely within sample positions of the background portion 36' adjacent to the dashed-line border of the disoccluded area 26'. Representatively, some of these adjacent sample positions are illustrated in Fig. 2 by small magnetic boxes between the dashed and dotted lines in Fig. 2. In order to filter the depth/disparity information within these sample positions adjacent to disoccluded area 26', filler 34 may individually perform the following procedure on each of the sample positions. The procedure is illustrated in Fig. 2 exemplarily with respect to the sample position indicated with a small cross. In particular, filler 34 evaluates a local statistical distribution of the depth/disparity value of depth/disparity map 38 within a predetermined window 48 encircling, for example, and being centered relative to the current sample position (indicated by a cross in Fig. 2). The distribution or histogram is exemplarily shown in Fig. 2 at 49, i.e. the frequency of predetermined depth/disparity bins within the depth/disparity values of the samples located within window 48. Filler 34 may perform a two-means clustering in order to determine a background centroid and a foreground centroid in this local statistical distribution 49 with Fig. 2 exemplarily showing the background centroid to be located at depth/disparity value B and the foreground centroid to be located at depth/disparity value F. Then, filler 34 determines as to whether the depth/disparity value of the current sample position belongs to the background centroid or the foreground centroid. If same belongs to the background centroid as indicated by a dotted line in histogram 49, this value is maintained, whereas if the depth/disparity value of the current sample position belongs to the foreground centroid as exemplarily illustrated at a dash-dot-line, this value is changed to more closely correspond to, or to even be equal to, the depth/disparity value B of the background centroid as illustrated by the respective error pointing to B in Fig. 2. To be even more precise, the clustering may reveal two depth/disparity values, one corresponding to background, the other one corresponding to foreground, and the value of the depth/disparity value of the current sample position may be left unchanged if the depth/disparity value of the current sample position lies nearer to background than the locally determined depth/disparity value corresponding to background, and may be changed to be equal to the locally determined depth/disparity value corresponding to background if the depth/disparity value of the current sample position lies nearer to foreground than the locally determined depth/disparity value corresponding to background (cp. Eq. 1). This is done by filler 34 for each sample position belonging to background portion 36' and bordering disoccluded area 26'. The changes to sample values of previously filtered sample positions may be used for deriving the local statistical distribution for following sample positions, but, preferably, do not. The effect of the filtering is that faultily estimated depth/disparity values within the depth/disparity map 38 of the virtual view image 28 are corrected by this filtering and thus, do not negatively influence the subsequent extrapolation into the disoccluded area 26'.

Further, the filler 34 may be configured to, in extrapolating the depth/disparity information of the depth/disparity map 38 associated with the second virtual view image 28 into the disoccluded area 26' of the second virtual view image 28, perform the extrapolation along a direction 49a pointing from a virtual view which the virtual view video relates to, to an original view from which the virtual view video has been obtained by DIBR. In the exemplary case of Fig. 1 and 2, the video 10 corresponds to a virtual view positioned to the right relative to the original view from which video 12 has been obtained by DIBR, and thus, the extrapolation is performed from right to left when locking onto image 28.

As already mentioned above, the updater 22 may be configured to update, locally within the background portion 16 of the first virtual view image 18, both texture information of and a depth/disparity map 24 associated with the background sprite image 24 based on the first virtual view image 18 and the associated depth/disparity map 20. The filler 34, in turn, may be configured to copy the background sprite image 24 into the second virtual view image 28 at portions of the disoccluded area 26 where the depth/disparity map 32 associated with the background sprite image 24 has a predetermined relationship to the depth/disparity map 38 of the second virtual view image 28 having been filled by extrapolation into the disoccluded area 26, such as being nearer to the background. The copying may or may not also involve co-located copying of the disparity/depth map 32 into map 38.

As will be outlined in more detail below, the background detector 14 may be configured to identify the background portion 36 of the second virtual view image 28 based on the depth/disparity map 38, and the updater 22 may be configured to update the background sprite image 24 also based on the background portion 38 with this updating repeating, for example, for the following images.

As became clear from the above discussion, the filling of the disoccluded area within the virtual view images by copying co-located information from the background sprite image 24 may not result in a complete filling of the respective disoccluded area. Rather, this copying represents merely a kind of first trial, resulting in a filling of a first portion of the disoccluded area, indicated by a dot-shading in Fig. 1.

In particular, the filler 34 may be configured to fill a first portion of the disoccluded area 26 of the second virtual view image 28 by copying, within the first portion, the background sprite image 24 into the second virtual view image 28 and fill first holes 42 of the disoccluded area 26 of the second virtual view image 28, not covered by the first portion and smaller than a predetermined size, by spatial interpolation. A Laplacian equation may be used for the spatial interpolation. Second holes 44 of the disoccluded area 26, not covered by the first portion, may be filled by texture synthesis. The filler 34 may be configured to, in texture synthesis, fill the second holes 44 by a patch-based texture synthesis using a patch filling order according to which the patch-based texture synthesis starts from a portion 46 of a circumference of the second hole, bordering a portion of the background portion 36 of second virtual view image or, as it is shown here, a portion of the first portion with, concurrently, facing the background portion 36, and proceeds towards a portion of the circumference of the disoccluded area of the second virtual view image, bordering a foreground portion 40 of the second virtual view image.

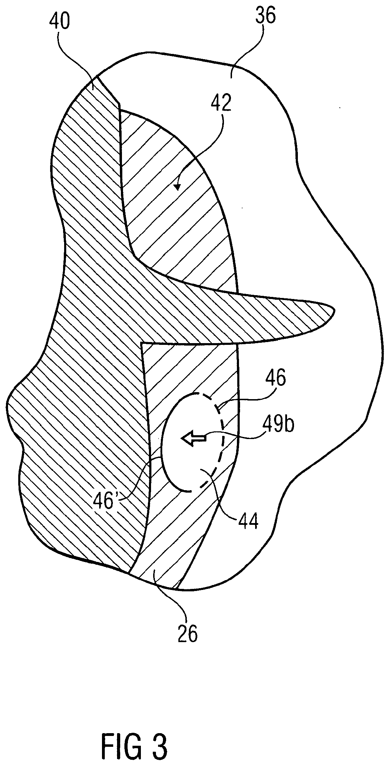

See, for example, Fig. 3 illustrating the partial view of virtual view image 28 already having been shown in Fig. 1, assuming that the aforementioned first portion of disoccluded area 26 shown with a dot-shading has already been pre-filled by copying from background sprite image 24. Hole 44 may exceed the aforementioned size threshold and has a part 46 of its circumference facing the background portion 36 and another part 46' of its circumference facing contrary thereto into the direction of the foreground portion 40. That is, in the illustrative case of Figs. 1 and 3, hole 44 fully lies within the disoccluded area 26 without touching the background portion 36 and the foreground portion 40. However, any of the just-mentioned cases may also apply. That is, circumference portion 46 may partially coincide with the border between background portion 36 and disoccluded area 26, and/or circumference portion 46' may partially coincide with the border between foreground portion 40 and disoccluded area 26. As just described, filler 34 may be configured to fill hole 44 by use of patch-based texture synthesis using a patch filling order 49b pointing from circumference portion 46 to a circumference portion 46'. However, in accordance with an alternative embodiment, filler 34 restricts the patch-filling order to correspond to error 49b merely in case circumference portion 36' actually touches foreground portion 14. The advantage of using the patch filling order direction 49b is as follows: typically, the best patch filling results are found at the beginning of the patch filling process. Later, at the end of the patch filling process, i.e. when hole 44 has almost completely been filled, it gets more difficult to find appropriate reference patches to fill hole 44. In this case, it is advantageous when the resulting deviations and artifacts resulting from mis-patching occurs at the border of the foreground portion 40 rather than the side facing the background portion 36 where image 28 shall represent a continuous image of the background content.

The filler 34 may be configured to, in filling the second holes 44, pre-estimate texture information within the second hole 44 by, for a predetermined location within the second hole 44, locally determining a central tendency of a distribution of the texture information of the background portion - without the foreground portion - of the second virtual image and the first portion of the disoccluded area 26 and assigning a texture value of the central tendency to the predetermined location, and patching the second holes 44 by texture patches with registering and/or selecting the texture patches considering both texture information of the background portion of the second virtual view image surrounding the second holes 44, along with the first portion, and the pre-estimated texture information within the second holes 44.

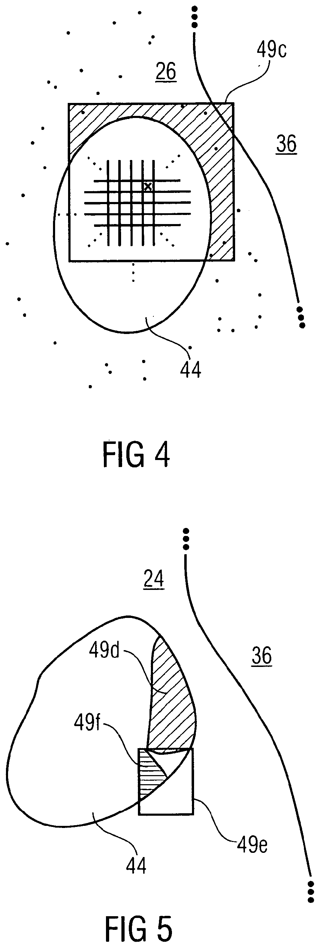

See, for example, Fig. 4, which shows a partial view of Fig. 3 in a situation right before the patch filling begins. In this situation, all sample values within the disoccluded area 26 have, in accordance with one of the aforementioned embodiments, a depth value associated therewith, but in any case, all the sample values illustrated with the small quadratic boxes within hole 44 have not yet any depth/disparity value assigned thereto. Rather, this is the aim of the patch filling process. The surrounding sample positions, however, belonging to background portion 36 as well as the copied first portion of disoccluded area 26, do have a depth/disparity value assigned thereto. In order to assist the subsequent actual patch filling process, filler 36 pre-assigns texture values to the sample positions within hole 44 by use of, for example, the following procedure: for every sample position, filler 34 determines a local distribution of the texture information assigned to the sample position surrounding hole 44 so far, i.e. the sample positions within background portion 36 and disoccluded area 26 with, in accordance with an embodiment, excluding, however, texture information of sample positions belonging to the foreground portion 40. To this end, filler 34 arranges, for each sample position within hole 44, a window 49c so as to encircle the respective sample position and being centered thereto. In Fig. 4, this is exemplarily shown for the sample position indicated by a small cross. The texture values of the sample positions belonging to the first portion of the disoccluded area 26 or background portion 36, i.e. the portion within window 49c shaded, contributes to the just-mentioned local distribution, and filler 34 determines the central tendency of this distribution and assigns same as texture value to the respective sample position (the one indicated by a small cross in Fig. 4). By this measure, filler 34 pre-assigns texture values to each of the sample positions within hole 44, for example. Later on, filler 34 takes these pre-assigned texture values into account when patching hole 44.

See, for example, Fig. 5 illustrating the same partial view as Fig. 4 with assuming, however, that the just-described pre-assignment has already been performed, i.e. all sample values within hole 44 have a respective texture value pre-assigned thereto. Further, Fig. 5 shows exemplarily a portion 49d, which has already been filled by patching. Further, Fig. 5 illustratively shows a reference patch candidate 49e positioned at a current circumference encircling the remaining portion of hole 44 not yet having been filled by patching. As is shown in Fig. 5, a portion 49f of patch 49e overlaps the just-mentioned remaining portion of hole 44 not yet having been filled by patching. Instead of disregarding this area 49f when determining the match between reference patch candidate 49e to the texture contents surrounding the remaining portion not yet having been filled by patching, filler 34 may determine the match also based on a deviation of the reference patch candidate 49e to the pre-assigned texture values within area 49f in order to determine the match quality. For example, filler 34 may weight texture deviations within area 49f less than texture deviations within the remaining area of patch candidate 49e. The effect of the pre-assignment of texture values to the sample positions within hole 44 is, accordingly, that the patch filling result is more plausible than without texture pre-assignment. Naturally, filler 34 may also weight texture deviations within the area of patch candidate 49e overlapping area 49d different from texture deviations within area 49e overlapping the first portion of disoccluded area 24 having been filled by copying from the background sprite image 24 and even alternatively, filler 34 may differentiate between, i.e. differently weight, texture deviations of portions of area 49e overlapping the first portion of the disoccluded area 24, having already been filled by copying from the background sprite image 24 on the one hand, and those at portions overlapping the background portion 36 on the other hand.

As soon as the reference patch candidate 49e resulting in the best match has been determined by filler 34, the texture information of this reference picture candidate 49e within area 49f may be assigned to or may be used to overwrite the pre-assigned texture values of the sample positions of hole 44 covered by area 49f.

As far as the afore-mentioned patching order 49b is concerned, it should be noted that filler 34 may be configured to implement this order by consecutively or iteratively select a location along the current circumference of the remaining portion of hole 44 not yet having been filled by patching, followed by determining the reference patch by which the remaining portion of hole 44 is to be patched at the selected location as described above. In other words, the reference patch election and the patch location determination may be separate steps which are repeatedly performed until hole 44 is filled. If so, the patch location determination may be performed such that locations along the aforementioned circumference of the remaining portion of hole 44 not yet having been filled, which are nearer to background portion 36 are more likely to be in-line next than locations along the circumference being nearer to the foreground portion. For example, the central tendency of depth/disparity values already being assigned to neighboring sample positions within, for example, a predetermined window of the respective location along the circumference of the just-mentioned remaining portion of hole 44, may be used as a priority ranking in order to determine an order among the different locations along the circumference. In even other words, filler 34 may determine a filling order among the locations along the circumference of the remaining portion of hole 44 not yet having been filled by assigning a local mean value of already (fixedly) assigned depth/disparity values to each location with that location serving as the next location in line (where patch-filling shall be performed), which lies nearest to the background according to this local mean value. After having performed patch-filling at that location, the circumference of the remaining portion not yet having been patch-filled changes, i.e. the remaining portion becomes smaller, and accordingly, the filling order among the locations has to be updated and the next location to be used for patch-filling inline is determined, etc. The resulting patch-filling order thus obtained, generally points from the background portion 36 to the foreground portion as already mentioned above.

Alternatively, however, patch location election and reference patch matching may be mixed-up by combining the above-mentioned deviation function to be minimized in accordance with the above-described patch-matching for selecting the reference patch candidate, with a weighting decreasing the patch candidate deviation measure if the afore-mentioned mean depth/disparity value lies nearer to the background, and increasing the patch candidate deviation measure if the mean depth/disparity value lies nearer to the foreground, relative to each other. By this measure, patch location and reference patch candidate would be commonly selected from a set of possible combinations of location/patch candidate, sequentially by minimizing a common function combining the afore-mentioned mean depth/disparity value and the texture deviation measure so that, if some reference patch candidates match very well to a portion along the circumference of the remaining portion of hole 44 not yet having been filled, has an increased probability to be chosen even if this portion faces the foreground portion 40, especially if merely less appropriate patches are found for portions facing the background portion.

The filler 34 may further be configured to post-process the texture information within the second holes 44 as obtained by the texture synthesis, by seamless cloning - such as covariant or poisson cloning - with using surrounding texture information from the background portion of the second virtual view image and the first portion of the disoccluded area of the second virtual view image, as a boundary region, to which the seamless cloning adjusts colors of the texture information within the second hole, and with ignoring the texture information of the foreground portion of the second virtual view image.

The updater 22, in turn, may be configured to update the background sprite image 24 at a portion other than a portion where the background sprite image 24 is updated based on the first virtual view image, based on the disoccluded area 26 of the second virtual view image 28 as filled by the filler 34, with this being true for either just the image or both image as well as depth/disparity data from map 38.

In other words, detector 14, updater 22 and filler 34 sequentially process the virtual view images and for each virtual view image currently processed, updater 22 firstly updates local areas of the background sprite image 24 and, optionally, the associated depth/disparity map 32 where the background portion of the current virtual view image has been detected by detector 14. As will be described in the following embodiment, updater 22 may refrain from using portions of the background portion of the current virtual view image being too near to a foreground/background transition of the current virtual view image since in these local areas, both, depth/disparity values and texture values of the virtual view image have a high uncertainty. Secondly, however, updater 22 may also exploit the filling result of filler 34 in order to fill portions within the background sprite image 24 (and, optionally, the associated depth/disparity map 32) which have not yet been filled by the background portion of the current (and, optionally, one or more of the immediately preceding virtual view image) as detected by detector 14 directly. In other words, updater 22 prefers directly copied information from the background portions of the virtual view images over the synthesized information of disoccluded areas of the virtual view images. However, this preference may change over time, i.e. updater 22 may log, for each sample position within the background sprite image 24 (and its associated depth/disparity map 32), the age of the texture (and depth/disparity) information assigned to that sample position in the background sprite image 24 with, for example, the age being measured by the number of virtual view images passed since the last update of the respective sample position value. Thus, if this age is too old, updater 22 may prefer to overwrite the respective sample position value (texture information and, optionally, depth/disparity information) with synthesized values within the disoccluded area of the current virtual view image, even if the sample values assigned to the respective sample position within background sprite image 24 (and, optionally, 32) has been gathered from a background portion 36 of a previous virtual view image directly.

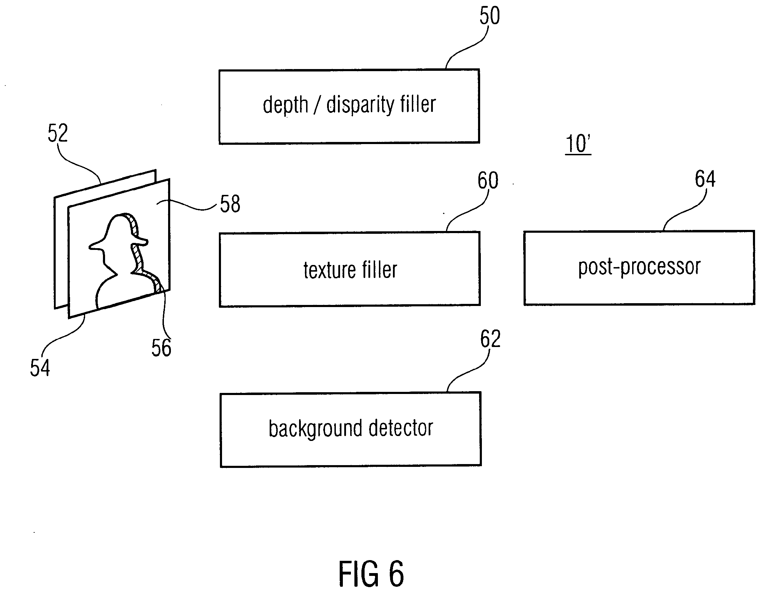

As shown in Fig. 6, according to another embodiment also described further below, an apparatus 10' for filling a disoccluded area in a virtual view image may use patch-based texture synthesis but may not necessarily use background sprite functionality. The patch-based texture synthesis may be responsive to a depth/disparity map associated with the virtual view image. The apparatus of Fig. 6 may comprise a depth/disparity filler 50 configured to fill the depth/disparity map 52 of the virtual view image 54 within the disoccluded area 56 thereof by extrapolating depth/disparity information of the depth/disparity map 52 of the virtual view image extending along a portion of a circumference of the disoccluded area 56 of the virtual view image bordering a background portion 58 of the virtual view image into the disoccluded area 56 of the virtual view image as, for example, illustrated above with respect to Fig. 2, and a texture filler 60 configured to fill at least a portion of the disoccluded area 56 with texture information by the patch-based texture synthesis, using the depth/disparity map 52 of the virtual view image within the disoccluded area, with an example for such a patch-based texture synthesis having been described above with respect to Figs. 3 to 5.

The depth/disparity filler 50 may be configured to filter, before extrapolation, the depth/disparity information by, for a predetermined location, locally determining a background centroid and a foreground centroid in a local statistical distribution of the depth/disparity information, maintaining the depth/disparity information at the predetermined location in case same belongs to the background centroid and changing the depth/disparity information at the predetermined location to correspond to a depth/disparity value of the background centroid, in case the depth/disparity information belongs to the foreground centroid.

The texture filler 60 may be configured to fill at least a portion of the disoccluded area with texture information by the patch-based texture synthesis with using a patch filling order according to which the patch-based texture synthesis starts from a portion of the circumference of the at least one portion of the disoccluded area, bordering deeper parts of the depth/disparity map, towards a portion of the circumference of the at least one portion of the disoccluded area, bordering more frontal parts of the depth/disparity map.

The Apparatus 10' may also optionally comprise a background detector 62 configured to separate the virtual view image into a background portion and a foreground portion thereof, based on the depth/disparity information; and the texture filler 60 may be configured to fill at least a portion of the disoccluded area with texture information by the patch-based texture synthesis, wherein the texture filler is configured to, in filling the at least one portion, pre-estimate texture information within the at least one portion by, for a predetermined location within the at least one portion, locally determining a central tendency of a distribution of the texture information of the background portion of the virtual view image and assigning a texture value of the central tendency to the predetermined location, and patching the at least one portion by texture patches with registering and/or selecting the texture patches considering both the background portion of the virtual view image surrounding the at least one portion and the pre-estimated texture information within the at least one portion, but disregarding the foreground portion of the virtual view image.

The background detector 62 may be configured to separate the virtual view image into a background portion and a foreground portion thereof, based on the depth/disparity information while the texture filler 60 is configured to fill at least a portion of the disoccluded area with texture information by the patch-based texture synthesis. The Apparatus may than comprise a post-processor 64 configured to post-process the texture information within the at least one portion as obtained by the patch-based texture synthesis, by seamless cloning with using texture information of the background portion of the virtual view image surrounding the disoccluded area, as part of a boundary region, to which the seamless cloning adjusts colors of the texture information within the at least one portion, and disregarding the foreground portion of the virtual view image as far as the boundary region is concerned.

Details with regard to the better functionalities of the embodiment of Fig. 6 have been described above with respect to Figs. 1 to 5, and these details shall also apply to the embodiment of Fig. 6 as far as the details with respect to Figs. 1-5 do not involve the existence of background sprite images. That is, most of the explanations presented above with respect to Figs. 2-5 also apply to the embodiment of Fig. 6 with, however, hole 44 corresponding, for example, to the entire disoccluded area 24, i.e. there is no first portion of the disoccluded area 24 pre-filled by copying from the background sprite image. The remaining details, however, also apply to the embodiment of Fig. 6.

Next, some embodiments are described in more detail. These embodiments make clear that DIBR may be used to generate the aforementioned virtual views, and provide some details with respect to functionalities having been described above in more general terms. In order to make the correspondence between the subsequently described embodiments and the above-described embodiments clearer, reference signs of the above-discussed figures are reused in the following description.

Generally speaking, depth-image-based rendering (DIBR) may be used to generate additional views of a real-world scene from images or videos and associated per-pixel depth information. An inherent problem of the view synthesis concept is the fact that image information which is occluded in the original view may become visible in the "virtual" image such as 18 or 28. The resulting question is: how can these disocclusions be covered in a visually plausible manner? In the present embodiment, a temporally and spatially consistent hole filling method for DIBR is presented. In a first step, disocclusions in the depth map 38 are filled. Then, a background sprite 24 (32) is generated and updated with every frame using the original and, optionally, synthesized information from previous frames to achieve temporally consistent results. Next, small holes 42 resulting from depth estimation inaccuracies are closed in the textured image, using methods that are based on solving Laplace equations. The residual disoccluded areas 44 are coarsely initialized and subsequently refined by patch-based texture synthesis. Experimental results obtained by the method are presented, highlighting that gains in objective and visual quality can be achieved in comparison to the latest MPEG view synthesis reference software (VSRS).

The just-described approach for handling disocclusions in 3D video is based on non-parametric texture synthesis. Temporal correlations between different pictures are taken into consideration via a background (BG) sprite 24. A robust initialization gives an estimate of the unknown image regions, which is refined during the synthesis stage.

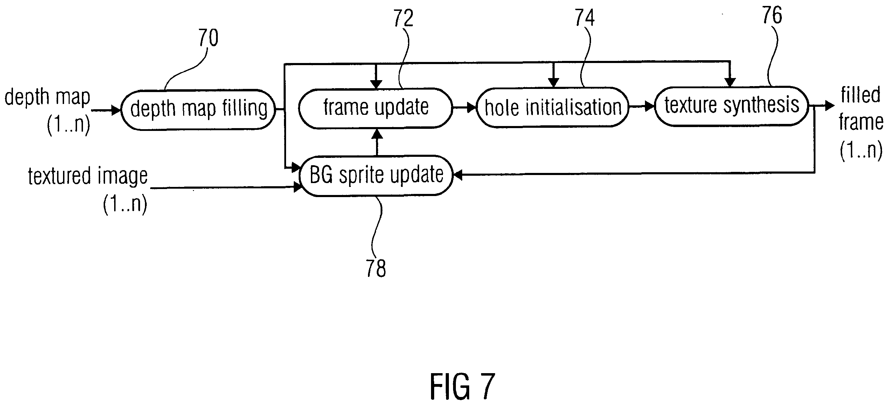

Fig. 7 outlines the framework as a block diagram. It is assumed that the BG is static. For moving BG, a motion estimation stage needs to be included to compensate for the BG motion. Then, texture filling can be conducted as described next. The just-presented hint is, naturally, also valid for the embodiments having been described above with respect to Figs. 1 to 6. That is, updater 22 may be configured to compensate for background motion between the consecutive virtual view images in order to maintain the consistency between differently old values within the background sprite image.

To compute the depth maps (DM), such as 20 and 38, the method presented in [20] may be used. The method introduced in [25] may be utilized to warp an original image, using the associated DM into the new "virtual" viewing position. The displacement for scene content from an original to the new viewing position depends on the depth value. FG and BG objects are therefore warped differently, causing uncovered image regions, such as 26.

The goal of the synthesis - or occlusion filling - algorithm described below is to fill these disocclusions (holes), which become visible in the "virtual" view and the DM, in a visually plausible manner. Furthermore, the synthesis should be temporally stable, meaning that information from previous frames are taken into consideration. This is achieved with an image (see 24) called a BG sprite, which is of the same size as a frame and stores BG information from previous frames. In a first step, the disoccluded areas in the DM are filled 70 (cp. Fig. 2). The BG sprite is then updated with known BG information from the current picture (cp. 22). Next, the holes (26) in the current picture are updated 72 from the BG sprite. The remaining holes (such as 44) are initialized 74 from the spatially adjacent original texture, providing an estimate of the missing information. In the next step, patch-based texture synthesis 76 is used to refine the initialized area. The BG sprite 24 (32) may be finally updated 78 with the synthesized image information.

From the inherent properties of the applied warping, larger uncovered areas mostly belong to BG objects. The DM may be an 8 bit gray scale image, denoted as D in the following The closest point to the camera may be associated with the value 255 and the most distant point associated with the value 0 (cf. Fig. 8 (a)-(c)). The uncovered areas in the DM are denoted as $\Psi$. Due to inaccuracies in depth estimation, FG objects may be warped into $\Psi$ (cf. Fig. 8 (a)). Therefore, small blobs up to $\gamma$ pixels in $\Psi$ are assigned to $\Psi$ because they are assumed to correspond to noise and may otherwise lead to noticeable inaccuracies in the post-processed DM (cp. Fig. 8 (b) and (c)). The holes (26) in the DM are filled (70) line-wise from the BG (36). The filling direction (49a) for the example in Fig. 8 (a) is marked with arrows 90. One possibility is to fill the last known BG depth value $D_i$ line-wise into $\Psi$ (Fig. 8(c)). However, relying on a single $D_i$ value can be error-prone. For that reason, in this embodiment, the spatial neighborhood at a location i is clustered into two centroids, $c_{min}$ and $c_{max}$, representing FG and BG. These may be computed via $k$-means clustering ($k=2$). The neighborhood may be given by an squared area (48) of $M{\times}N$ pixels, centered at location $i$. Given $c_{min}$ and $c_{max}$ the selection criterion for the depth values to be filled into $\Psi$ is defined as follows:

$$D_j = \begin{cases} D_i \text{ if } D_i \leq c_{min} \\ c_{min} \text{ otherwise} \end{cases}, \quad j \in \Psi; i \in D/\Psi. \tag{1}$$

.

**A** sprite and image Update is used in order to log information available on the background from previous images (such as 16).

The BG information and its associated depth values from previous pictures are stored as the BG sprite $S$ and DM sprite $G$ These sprites accumulate valuable information for rendering subsequent images. In fact, by referencing the sprite samples for filling unknown area in the current picture, the synthesis is temporally stabilized.

For each new picture, the depth values of all pixel positions are examined. All pixels with a depth value below $\overline{c_{min}}$ are considered for sprite update, where $\overline{c_{min}}$ is the median $c_{min}$ value in the current picture. Depth values below $\overline{c_{min}}$ describe the BG, while the remaining are assigned to the FG. Depth estimates at BG-FG transitions and along the uncovered area $\Omega$, are in accordance with the present embodiment considered unreliable. Therefore, a two pixels wide area around the unreliable regions is not considered for sprite update. The remaining locations with $D_i < \overline{c_{min}}$ are stored (78) in the BG and DM sprites, respectively. After the synthesis step, newly synthesized textures and depths are incorporated in the sprites as well.

Every picture is updated (72) from the BG sprite, whereby pixel positions corresponding to pixels in the BG sprite with non-assigned background information are ignored. The pixel positions in $s$ to be used for updating the current picture $p$, (thus determining extensions of shaded portions of 26 and the position and size of holes 42 and 44, respectively) are selected as follows:

$$P_j = \begin{cases} S_j & \text{if } D_j < G_j + \beta \\ P_j & \text{otherwise} \end{cases} \quad \forall j \in \Omega \tag{2}$$

where $S_j$ and $G_j$ represent the gray level at location $j$ in the BG and the DM sprite, respectively. That is, background objects in the background sprite image are updated if hidden by new background objects (lying in front of the sprite image background object. The parameter $\beta$ allows for some variance in the local BG depth label. Eq. (2) is applied to the chroma channels in the same way. In order to account for illumination variations, the covariant cloning method [23], [18] may be utilized to fit the BG sprite samples to the color distribution in the relevant neighborhood of the current picture. The cloning method is adapted to the given view synthesis framework by ensuring that only BG pixels in the current picture are considered as valid boundary conditions.

An initial filling of textured images is described next.

In a first step, the Laplacian equation [21] is used to fill small holes (such as 42) in the current image. For the reconstruction of smooth regions this method gives satisfactory results. Good visual results are observed for holes smaller than $\gamma$ pixels (e.g. 50 pixels), where Laplace cloning is about 10 times faster than patch-based texture synthesis. Hence, small holes are regarded as finally filled and are not considered in the texture refinement step.

For holes larger than $\gamma$ pixels, is may be shown [22] that the visual results of texture synthesis can be improved by using an initial estimate of pixel values. In [22] an initialization method is presented that is based on the statistical properties of known samples in the vicinity (see 49c) of $\Omega$ Commonly, the known samples constitute valid BG pixels, but in some cases the depth information at the FG-BG transition are not reliable. Hence, the probability distribution of known BG pixel values in the spatial neighborhood of the hole area is observed to be skewed. To obtain the BG value from the spatially adjacent samples, the Median estimator is used, which is the standard measure of (end value) location used in case of skewed distributions.

A window (49c) of samples centered on the pixel to be filled is considered. For each unknown pixel, a measure $N_{BG}$ may be set equal to the number of known pixels that are classified as BG in the current window. The unknown pixels may be visited in decreasing order of $N_{BG}$. However, this is not critical, and the order may also be determined otherwise, or the pixels within the area are to be patched-filled may be processed parally. A 2D median filter operates on the BG pixels in the current window and the filtered output may be used to initialize the unknown pixel. The filtering operation can be viewed as the process 74 of extracting a valid BG value from the spatially neighboring samples. This serves as a coarse estimate for the texture synthesis stage 76 that can recover the details in the unknown region. Using the described initialization scheme 74, the sensitivity of the texture synthesis stage to outliers in the transition region is significantly reduced.

Next, the Texture Refinement via synthesis 76 is explained.

In the texture synthesis technique the unknown region (unshaded area of 44 in Fig. 5) is synthesized by copying content from the known parts ($P$ -$\Omega$) to the missing parts ($\Omega$) of the image. Patch-based texture synthesis is used in this work to refine the initialized areas. To determine the patch filling order, the method introduced in [15] is utilized and additionally enhanced in two ways. Firstly, already estimated samples through initialization are regarded in further processing steps (cp. Fig. 5). Hence, the gradient is calculated for all the samples in the current patch, which leads to a better isophote direction (Please refer to [15] for the original algorithm). Secondly, the filling order is steered such that the synthesis starts from the BG area towards the FG objects (see Fig. 3). After these modifications, the remaining locations in the border of the hole are assigned filling priorities according to [15]. In the following, the patch (49e) at the current location to be filled is denoted as $c$. Its center is denoted as $c_{center}$. An area of $5M \times 5N$ around $c_{center}$. may be defined to be the source area $s$ The filling algorithm now searches for a patch $x$ in $s$ that is similar to $c$. In the matching routine only the luminance channel may be considered. Given the filled DM, the depth value of $c_{center}$ is always known. All pixel positions in $s$ with depth values higher than $c_{center}$. are excluded from the search area. Therefore, patches will not be taken from areas with depth values much higher than the current region to be filled, such that foreground objects are actively excluded. Naturally, this fact may also be applied to the embodiments of Figs. 1-5. To speed up the matching procedure the source area is sub-sampled by a factor of. 2. The remaining source positions are used as center positions for x. The best continuation patch out of all candidate patches in the source area may be found by minimizing the following cost function:

$$
E = \sum_{i=1}^{K} \|x_i - c_i\|^2 + \omega_\Omega \sum_{j=1}^{K_\Omega} \|x_j - c_j\|^2 + \\
\omega_\nabla \sum_{i=1}^{K} \|\nabla x_i - \nabla c_i\|^2 + \omega_\nabla \omega_\Omega \sum_{j=1}^{K_\Omega} \|\nabla x_j - \nabla c_j\|^2
$$

(3)

where $K$ is the number of original and $K_\Omega$ is the number of initialized pixels in $c$. $\nabla c$ is the gradient map of $c$ and $\nabla x$ is the gradient map of $x$. $\omega_\Omega$ is the weighting factor for the initialized values in $\Omega$ and $\omega_\nabla$ is the weighting factor for gradient component in the matching process. In the last term the weight is given by $\omega_\Omega \omega_\nabla$ because here, the distance between $x$ and c is determined both in $\Omega$ and on sample wise gradient map. To ensure smooth transitions between adjacent patches, an efficient post-processing method, based on covariant cloning, is utilized [18]. This post-processing approach may also be adapted to the framework in such a manner that FG objects are not considered as boundary pixels.

Transferring the just-outlined embodiment for a patch-based texture synthesis procedure onto the embodiments described above with respect to Figs. 1 to 5, the patch to be chosen for patching at some current position along the circumference of the portion of hole 44 not yet having been patch-filled, may be selected among several possible reference patches by seeking the one minimizing a difference between the texture content of the respective patch at the current position and the underlying texture content of the pre-assigned but not yet having been patch-filled portion on the one hand and the underlying/covered portion of the background portion or already having been patched portion of hole 44. The difference measure may be the sum over the quadratic sample-wise difference between the texture (i.e. luma and/or chroma) values and/or the local gradient thereof. The first term in equation 3, for example, would measure the difference in texture within patch 39e external to portion 49f and a third term would measure the difference in gradient of texture in the same area. Similarly, the second and fourth term in equation 3 would measure the same differences within area 49f. Weight $\omega_\Omega$ may be between 0 exclusively and 1 exclusively and $\omega_\nabla$ may be even 0 or greater than 1 or therebetween.

However, it should be noted that a different differential measure may be used than the quadratic one used in accordance with equation 3.

Experimental results obtained by the above filling scheme are described next.

The results obtained by the above filling scheme were described with those of the MPEG view synthesis reference software (VSRS) [25] version 3.6. For evaluating the algorithm just-outlined , three 3D video sequences, provided to MPEG by the Gwangju Institute of Science and Technology (Korea) are used: "Book arrival", "Lovebird1" and "Newspaper". They have a resolution of 1024 x 768 pixels. For every sequence, the rectified videos of several views with slightly different camera perspectives are available. The baseline between two adjacent cameras is approximately 65 mm. In the following , two original but not necessarily adjacent cameras (cf. Table 1, "Camera" column) for every sequence are considered.

**Table 1.** PSNR and SSIM results by the framework described above and the view synthesis reference software.

| Seq. | Camera | PSNR (dB) | | SSIM | |
|------|--------|-----------|------|-----------|------|
| | | Prop. | MPEG | Prop. | MPEG |
| Book. | 8 to 9 | **37.26** | 36.06 | **0.9836** | 0.9828 |
| Book | 10 to 9 | **35.63** | 35.15 | **0.9827** | 0.9810 |
| Book. | 8 to 10 | **31.28** | 30.25 | **0.9553** | 0.9525 |
| Book | 10 to 8 | **30.58** | 30.30 | **0.9551** | 0.9524 |
| Loveb. | 6 to 8 | 40.90 | **42.13** | **0.9302** | 0.9284 |
| Loveb. | 8 to 6 | **39.78** | 38.54 | **0.9444** | 0.9425 |
| Newsp. | 4 to 6 | 25.30 | **25.43** | 0.8936 | **0.8974** |
| Newsp. | 6 to 4 | **31.01** | 30.37 | 0.9123 | **0.9131** |

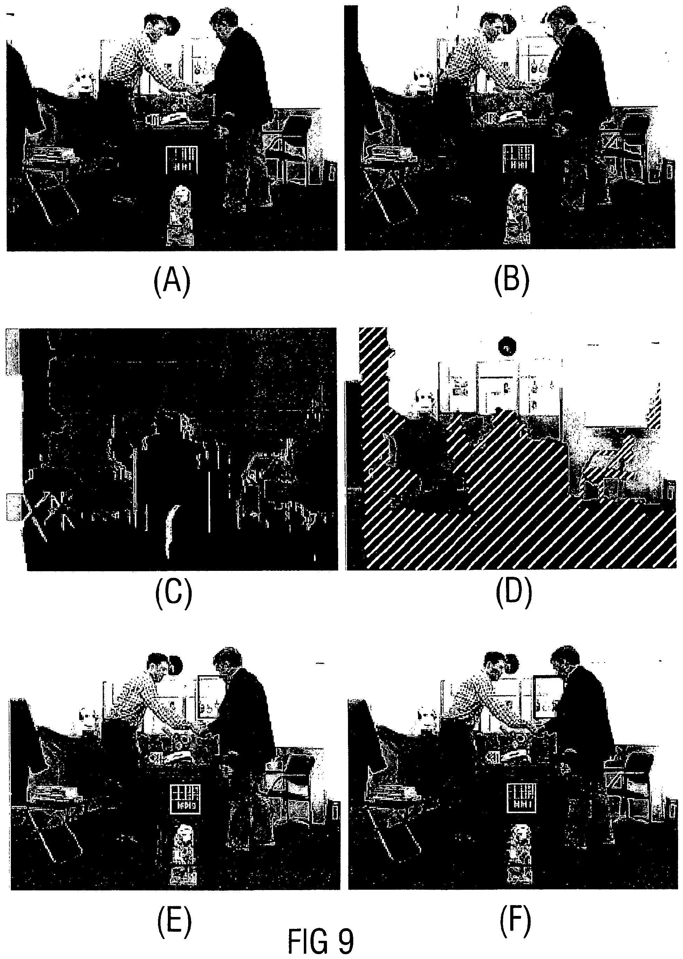

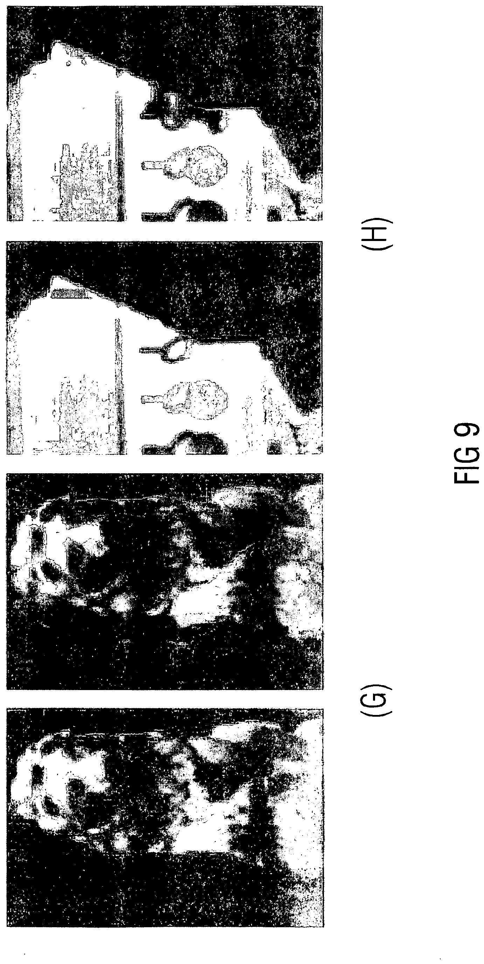

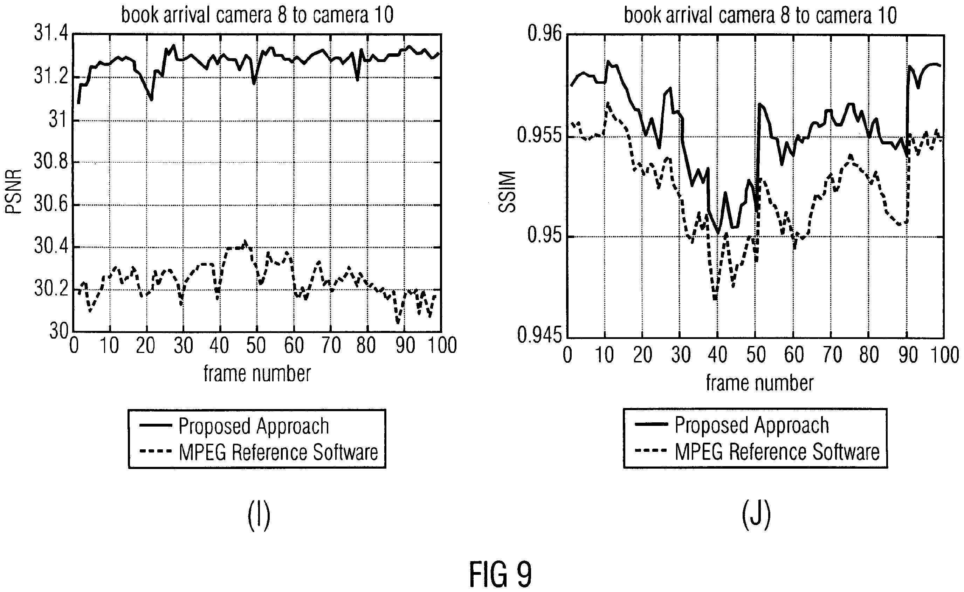

The following view synthesis operations are conducted: warping an original view (right and left) to the position of an adjacent view yielding a baseline of about 65 mm; baseline extension where the "virtual" camera position is 2 cameras away from the original camera location, giving a baseline of approximately 130 mm. For all experiments, the following parameters were chosen: $M=N=32$ pixels, $\gamma=50$ pixels, $\omega_\Omega=\omega_\nabla 0.6$ and $\beta=15$. The objective results given in Table 1 correspond to the mean PSNR and SSIM over all pictures of a sequence. The best result for every sequence is highlighted through bold face type. PSNR is computed locally, that is only for the defective area in the image, while SSIM is determined for the entire image. SSIM is used to assess the subjective visual quality [24], as PSNR is not an accurate measure thereof [24]. For the sequences "Book arrival" the approach described above gives better SSIM and PSNR results than MPEG VSRS. For the "Lovebird1" sequence the best results in terms of SSIM are obtained. Nevertheless, the PSNR value of MPEG VSRS is better for the case "warping camera 6 to the position of camera 8" because although the VSRS rendering results show obvious artifacts, the color information in the synthesized area somehow correlates with the true information and is strongly blurred, while our result is sharper but quite noisy. For the sequence "Newspaper" VSRS gives the better overall results, because all our modules rely on the DM. However, the DM is particularly unreliable here, leading to visual and objective losses. Nevertheless, some visual and objective gains can be obtained for the case "warping camera 6 to the position of camera 4" (cf. Table 1 and Fig. 8 (d)-(f), electronic magnification may be required). Fig. 9 shows some visual and objective results. In Fig. 9 (a), the original reference picture 51 of the "Book arrival" sequence is shown. In Fig. 9 (b), the warped image is shown (baseline extension, warping camera 8 to the position of camera10). The disoccluded area is marked in black. In Fig. 9 (c) and (d), the final BG sprite and its associated DM are shown. The final rendering result by the approach described above is shown in Fig. 9 (e). The result by VSRS is shown in Fig. 9 (f). Note that the approach described above yields sharper edges than VSRS. Fig. 9 (g) and (h) are magnifications of the white squared area in Fig. 9 (e) and (f) where the result for the algorithm described above is shown on the left side and the VSRS result on the right. Foreground information is correctly ignored for the recommended filling process (cf. Fig. (g)). As it can be seen in Fig. 9 (h) on the poster in the background, details are well preserved by our method. Fig. 9 (i) and (j) show the objective results. Significant gains in PSNR and SSIM are achieved.

To conclude, the above described occlusion filling scheme represents a filling approach for DIBR. The algorithm works for large baseline extensions and the rendering results are temporally and spatially stable. Image information from previous pictures is considered via a background sprite from which further subsequent pictures are updated. The remaining uncovered areas are first coarsely estimated in an initialization step and subsequently refined via patch-based texture synthesis. Is has been shown that the presented approach yields both subjective and objective gains compared to the latest MPEG VSRS, given reasonable depth maps. However, depth estimation inconsistencies especially at foreground-background transitions may lead to considerable degradation of the rendering results. This dependency may alternatively be relaxed. Additionally, the problem of global and local background motion may be addressed.

Next, another depth image based rendering texture synthesis technique is described, i.e. another embodiment for disocclusion filling, with this following embodiment being closer to the embodiment of Fig.6.

Generally speaking, the below described scheme may be used in free viewpoint television or 3D video, where depth image based rendering (DIBR) is used to generate virtual views based on a textured image and its associated depth information. In doing so, image regions which are occluded in the original view may become visible in the virtual image. One of the main challenges in DIBR is to extrapolate known textures into the disoccluded area without inserting subjective annoyance. In the filling scheme described next, texture synthesis is used. Initially, the depth map in the virtual view is filled at disoccluded locations. Then, in the textured image, holes of limited spatial extent are closed by solving Laplace equations. Larger disoccluded regions are initialized via median filtering and subsequently refined by patch-based texture synthesis. Experimental results show that the approach provides improved rendering results in comparison to the latest MPEG view synthesis reference software (VSRS) version 3.6 [1].

In particular, the below described disocclusion filling scheme represents a new approach to handle disocclusions in 3D video. The method is based on non-parametric texture synthesis such that "virtual" views with a large baseline can be rendered. A robust initialization gives an estimate of the unknown image regions that is further refined in a synthesis stage.

The description of the next filling scheme is organized as follows. First, the overall algorithm is presented. Next, depth map (DM) filling, image initialization and texture synthesis are presented in detail. Then, the simulation setup and experimental results are presented. Finally, conclusions and future steps are given.

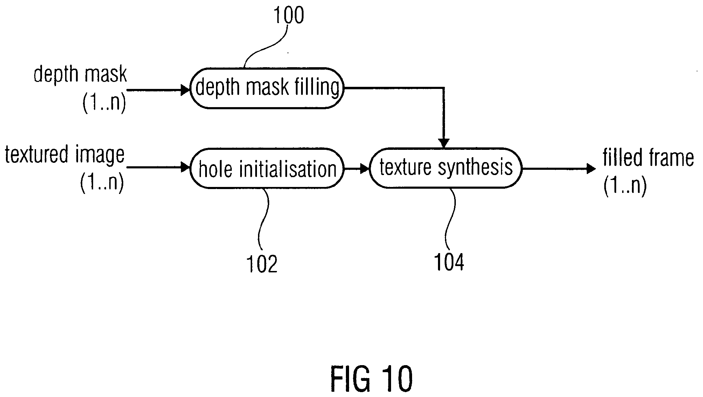

The algorithm of the filling scheme is depicted in Fig. 10 as a block diagram. Again, the method introduced in [20] may be used to compute the depth maps (DM). To warp an original image and its associated DM into the new "virtual" position, the method presented in [1] may be utilized. As the "virtual" camera moves along the epipolar lines, the objects are moved in opposite direction along the same lines and some image regions are uncovered (cf. Fig. 8(a)).

The aim of the following view synthesis algorithm is to cover the disoccluded area (holes) which becomes visible in the virtual view and the DM in a visually plausible manner. In a first step, the disoccluded area in the DM is filled 100. Then, very small holes are initially filled by solving Laplacian equations. The remaining holes are initialized 102 from the spatially adjacent original texture to give an estimate of the missing information and patch-based texture synthesis 104 is used to refine the initialized area.

The process of depth map filling 100 is described next.

The DM, denoted as D, is an 8 bit gray scale image. The closest point to the camera is associated with the value 255 and the most distant point is associated with the value 0 (cf. Fig. 8(a)-(c)). Depth filling is performed according to the reasonable assumption that the uncovered area belongs to BG and not to FG objects. The uncovered area in the DM is denoted as $\Psi$. Due to inaccuracies in depth estimation, FG objects may be warped into the disoccluded area. Therefore, blobs of up to $\gamma$ pixels in $\Psi$ are assigned to $\Psi$ because they are potentially very noisy and may otherwise lead to noticeable inaccuracies in the post-processed DM (cf. Fig. 8(b)). The holes in the DM are filled line-wise along the epipolar lines from the BG. The filling direction for the example in Fig. 8(a) is marked with white arrows. One possibility is to copy the last valid BG depth value $D_i$ line-wise into $\Psi$ (cf. Fig. 8(b)). But relying on a single $D_i$ value is not likely to be robust. For that reason, two centroids ($c_{min}$ and $c_{max}$) representing the FG and BG of $D_i$'s neighborhood are computed via $k$-means clustering ($k$=2). The considered neighborhood is determined by a window of size $M \times N$ pixels, centered on the location $D_i$. The condition to choose the depth value to be filled is as follows (cf. Fig. 8 (c)):

$$D_j = \begin{cases} D_i \text{ if } D_i \leq c_{min} \\ c_{min} \text{ otherwise} \end{cases}, \quad j \in \Psi; i \in D/\Psi. \tag{3}$$

After the depth map filling, an initial filling 102 of the textured pictures takes place which is described next.

In an initial filling step, small holes in the current picture are covered by using the Laplacian equation [21], which works well for the reconstruction of smooth regions. It can be assumed, that a small area of missing information fulfills this condition. This restoration method provides good visual results for holes less than $\gamma$ pixels (e.g. 50 pixels) and is faster than patch-based texture synthesis. This area is considered as finally filled and will not be refined with texture synthesis.

In [22], it is shown that the performance of texture synthesis can be improved by using an initial estimate of pixel values in the unknown region. In this paper, an initialization scheme that is based on the statistical properties of known samples in the vicinity of the hole area is employed. Generally, the known samples constitute valid BG pixels but in some cases the depth information at the FG-BG transition are not reliable. Hence, the probability distribution of known BG pixel values in the spatial neighborhood of the hole area is observed to be skewed. To capture the BG value from the spatially adjacent samples, here, the Median estimator is used, which is the standard measure of (end value) location used in case of skewed distributions.

A window of samples centered on the pixel to be filled is considered. For each unknown pixel, a measure $N_{BG}$ is set equal to the number of known pixels that are classified as BG in the current window. The unknown pixels are visited in decreasing order of $N_{BG}$. A 2D median filter operates on the BG pixels in the current window and the filtered output is used to initialize the unknown pixel. The filtering operation can be viewed as the process of extracting a valid BG value from the spatially neighboring samples.

This serves as a coarse estimate for the texture synthesis stage that can bring back the details in the unknown region. Using the described initialization scheme, the sensitivity of the texture synthesis stage to outliers in the transition region is significantly reduced.

Finally, a texture synthesis 104 of the textured pictures is performed as outlined below.

Patch based texture synthesis is a process in which small patches from a known area are used to fill an unknown area. The patch to be copied overlaps with original/synthesized samples such that there is a smooth fit. The algorithm proposed in [15] may be utilized to determine the filling order and is enhanced in two ways. Firstly, already estimated samples through initialization are considered in further processing steps. The gradient is computed for all the samples in the current patch, thus leading to a better isophote direction (Please refer to [15] for the original algorithm). Secondly, the filling order is steered such that the synthesis starts from the BG area towards the FG objects. To this end, locations in $\Psi$ are assigned filling priorities correspondingly. In the following, **c** denotes the patch at the current location to be filled, whose center is denoted as $c_{center}$. An area of $5M$ x $5N$ centered at $\mathbf{c_{center}}$ is defined to be the source area $s$. The filling algorithm now searches for a patch $x$ in $s$ that is similar to c. Only the luminance samples are considered in the matching routine. Using the DM that is already filled, the depth value of $c_{center}$ is always known. All pixel positions in $s$ with depth values higher than $D_{Ccenter}+\beta$ are excluded from search. In such a manner, patches will not be taken from area with depth values much higher than the current region to be filled, in other words foreground objects. The source area is sub-sampled by a factor of 2 to accelerate the matching operation. The remaining source positions are utilized as center positions for $x$. The best continuation patch out of all candidate patches is found by minimizing the following cost function:

$$E = \sum_{i=1}^{K} \|x_i - c_i\|^2 + \omega_\Omega \sum_{j=1}^{K_\Omega} \|x_j - c_j\|^2 + \\ \omega_\nabla \sum_{i=1}^{K} \|\nabla x_i - \nabla c_i\|^2 + \omega_\nabla \omega_\Omega \sum_{j=1}^{K_\Omega} \|\nabla x_j - \nabla c_j\|^2 \tag{4}$$

where $K$ is the number of original and $K_\Omega$ is the number of initialized pixels in **c**. $\nabla$c is the sample-wise gradient of **c** and $\nabla x$ is the sample-wise gradient of $x$. $\omega_\Omega$ is the weighting factor for the initialized values in $\Omega$ and $\omega_\nabla$ is the weighting factor for gradient component in the matching process. In the last term the weight is given by $\omega_\Omega\omega_\nabla$ because here, the distance between $x$ and c is determined both in sample and gradient domain. An efficient post-processing method is applied to ensure smooth transitions between adjacent patches [18]. This post-processing is adapted to the framework in such a manner that FG objects are not considered as boundary pixels.

Simulation setup and Experimental results of the just-described filling scheme is described now.

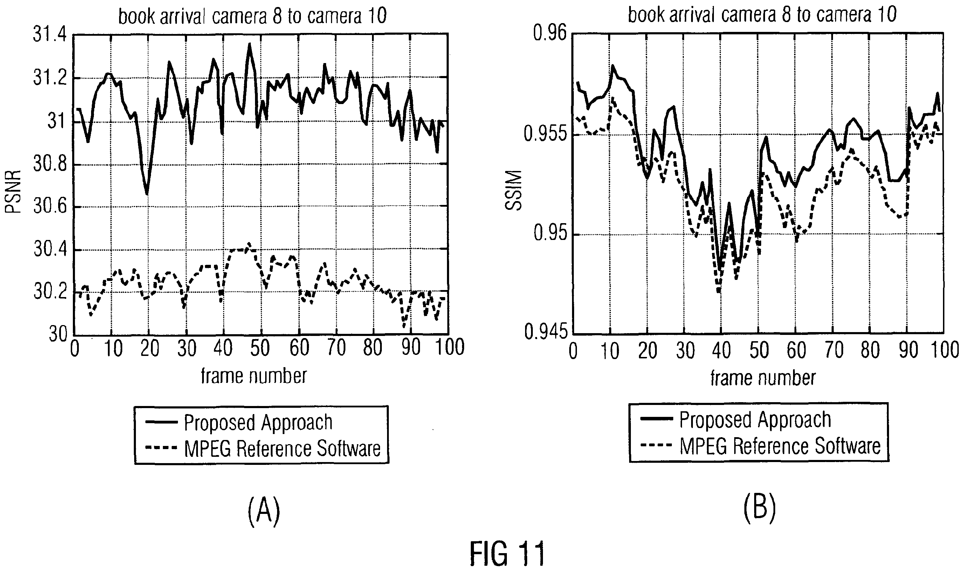

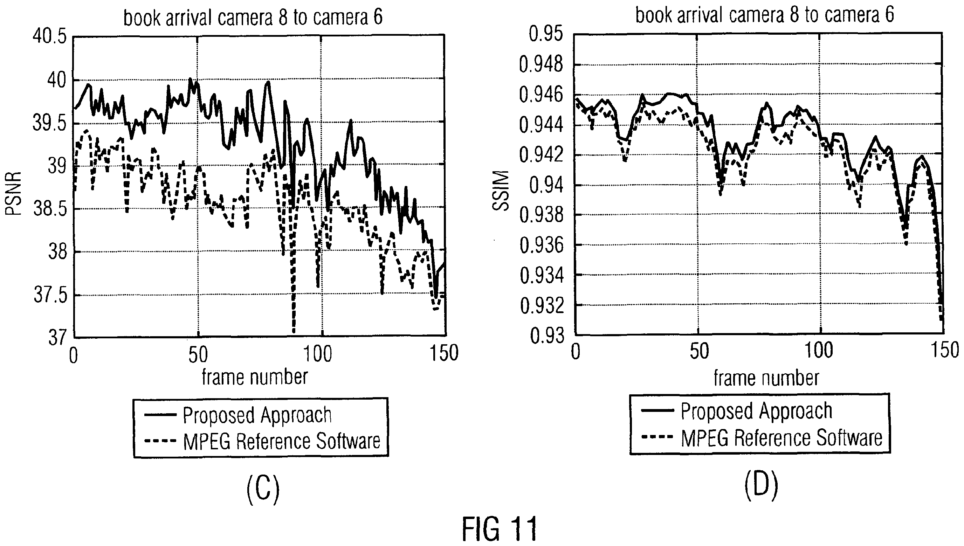

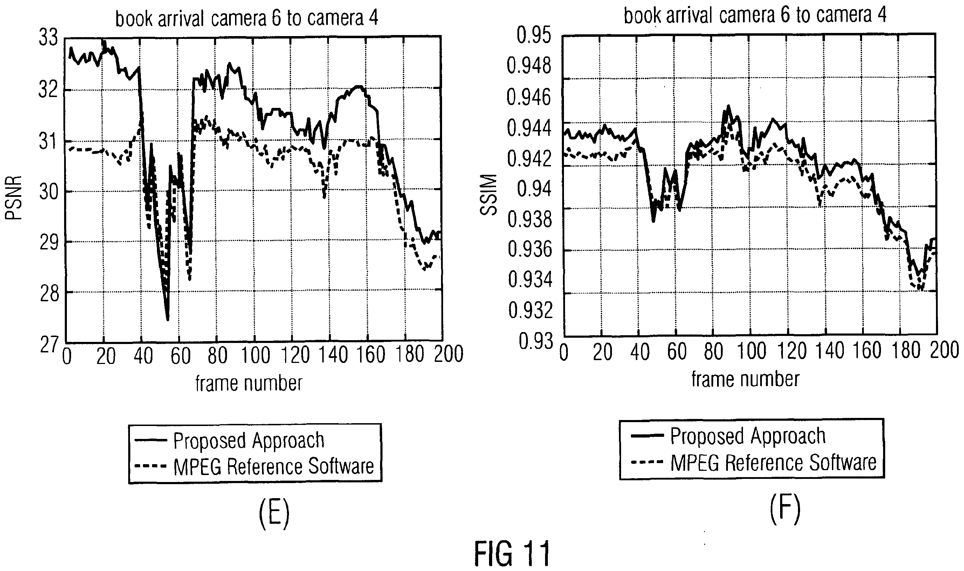

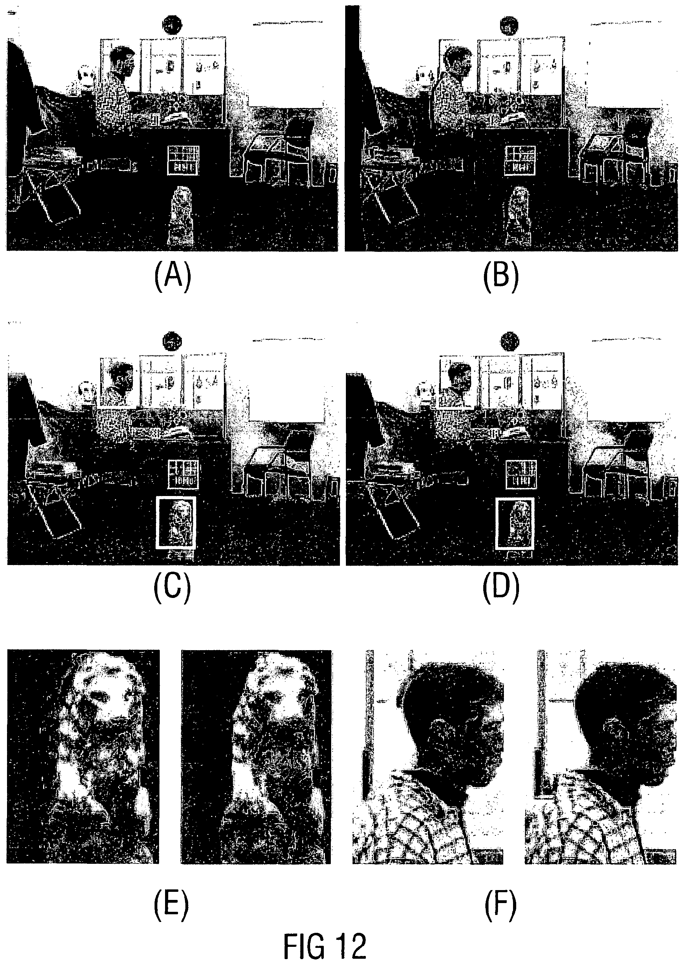

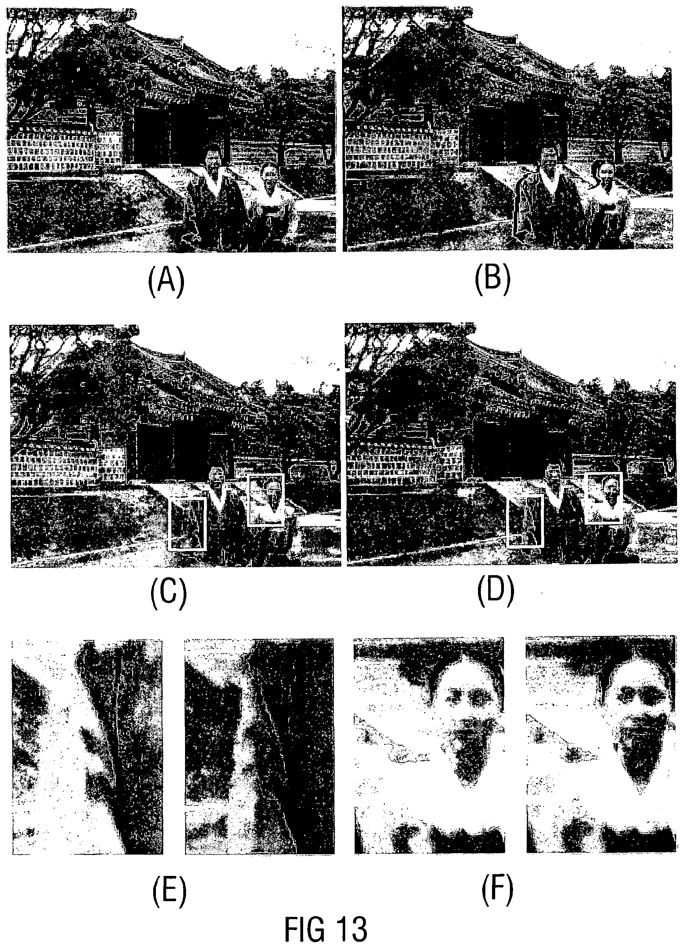

To evaluate the just-described approach, three 3D-video sequences "Book arrival", "Lovebird1" and "Newspaper" were used, having a resolution of 1024 x 768 pixels. For these sequences several rectified videos with slightly different camera perspectives are available. The baseline is approximately 65 mm between two adjacent cameras. For every sequence, two original but not necessarily adjacent cameras (cf. Table 1 "Camera" column) were considered. The following view synthesis operations were conducted: warping an original view (right and left) towards an adjacent view; baseline extension where the virtual camera position is 2 cameras away from the original camera location, giving a baseline of approximately 130 mm. For all experiments, $M=N=32$ pixels, $\gamma=50$ pixels, $\omega_\Omega=\omega_\nabla 0.6$ and $\beta=15$. Objective results are depicted in Table 1 by the mean PSNR and SSIM over all pictures of a sequence. PSNR is computed locally only for the defective area in the image while SSIM is determined for the entire image, because application of SSIM to arbitrarily shaped regions is not straightforward. Note that camera 7 of "Lovebird1" and camera 5 of "Newspaper" were not available so no reference was available for objective evaluation of the middle view case. For the sequence "Book arrival" the reported approach gives better SSIM and PSNR results than MPEG VSRS. For the "Lovebird1" sequence the best results in terms of SSIM were obtained. However, the PSNR value of MPEG VSRS is better for the case "camera 6 to 8" because although VSRS yields obvious artifacts, the color information in the synthesized area seams to correlate with the true information and is strongly blurred, while our result is sharper but noisy. For the sequence "Newspaper" VSRS gives the better results for the synthesis of camera 6 from camera 4, because our modules rely on the DM. However, here, the DM is particularly unreliable yielding visual and objective losses. Nevertheless, objective and visual gains can be reached for the case "camera 6 to 4" as shown in Table 1 and in Fig. 8(d)-(f) (electronic magnification may be required) respectively. In Fig. 8(d), the original reference image is shown. Fig. 8 (f) shows the result with VSRS and Fig. 8(e) the results with software in accordance with the present embodiment. Fig. 11 exemplarily shows objective results in PSNR and SSIM for one warping direction with large baseline out of all sequences. In Fig.12 and Fig.13 visual results for the sequences "book arrival" and "lovebird" are shown. In Figs. 12, 13 (a), the original reference picture is shown. It is frame 1 of the sequence "Book arrival" and frame 116 for "Lovebird1". In Figs. 12, 13 (b), the warped images are shown (large baseline extension for "Book arrival" camera 8 to 10, for "Lovebird1" camera 8 to 6). The disoccluded areas are marked black. The rendering results by MPEG VSRS are shown in Figs. 12, 13 (c), while the rendering results by the present approach are shown in Fig. 12, 13, 12 (d). Fig. 6 (e), (f) and Fig. 13 (e), (f) are enlargements of the white bounding boxes shown in (c) and (d), where the results for the present algorithm are shown on the right and the MPEG VSRS results are depicted on the left. In Fig.12 (e), (f) and Fig.12 (e), (f) it can be seen that our algorithm correctly fills the disoccluded areas, as no foreground data is used. This also leads to better object boundaries. As can be seen in Fig.12 (f) on the poster in the background, details are well preserved by our method. Also in Fig.13 (f), the staircase is reconstructed in a visually plausible manner by the preset approach.

Thus, the above outlined hole filling algorithm for DIBR works for large baselines and the rendering results are visually consistent. A robust initialization is used to obtain an estimate of the disoccluded area. Subsequently, a refinement step based on patch-based texture synthesis is applied. Overall, the present algorithm gives both subjective and objective gains compared to the latest MPEG VSRS. However, all modules of the approach depend on the depth map which can be especially unreliable at background-foreground transitions. Hence, wrong depth estimates may lead to significant degradation of the rendering results. In future work this dependency will be relaxed. Furthermore, alternative state-of-the-art synthesis methods will be examined in order to assess the potential gains that can be expected from texture synthesis algorithms in the DBIR context.

In the following, some advantages and specialities of the above outlined embodiments are highlighted.

Each depth value, which is to be continued line by line into the unknown area in the depth map, is checked using the neighborhood and will, if applicable, be replaced. This has the advantage that erroneously warped depth values are not filled into the exposed area. Thus, filling the depth map is robust against interference effects.

By introducing a background sprite, background information from preceding frames may be considered when synthesizing the exposed area. Thus, a temporal stability of the synthesis results may be realized.

From the sprite, background information is copied into the current frame. The same is adapted by means of covariant cloning to the possibly changed color and light conditions in the current image. The cloning method is modified insofar as only background pixels are used as frame conditions. Thus, the image information of foreground objects is neglected in the correction.

By initializing the exposed area by means of a median filter, the influence of erroneously warped color information (e.g. foreground pixels in the background) is minimized and a first estimate of the unknown area is given. This way, the results of the texture synthesis method are improved. In addition, the problem of "garbage growing" using in the patch-based texture synthesis may be reduced or eliminated.

For controlling the patch sequence in texture synthesis, an existing method is used. This is modified in two ways, so that the depth values and the initialized values may be considered when determining the filling sequence. This way, the exposures are filled with image information from the background and objects in the foreground are neglected when patching.

Within the source region, suitable continuation patches are searched for. By means of the depth values, however, pixel positions are identified and excluded which are spatially located before the area to be filled. This way, no continuation patches are taken from foreground regions.

For blurring the transitions between neighboring patches, a post-processing step is executed. The same is based on covariant cloning. This method was modified insofar as only background pixels are used as edge conditions. This way, foreground areas are not considered in photometric correction.

In general, the presented methods may be replaced by similar modules or methods, respectively.

When filling the depth map, instead of the used k-Means method another statistic classification algorithm may be used.

When generating the sprite, the filling sequence may be changed. It is thus, for example, possible to examine also future frames for existing background information. Further, mosaiking technologies may be used to calculate the background sprite.

As a post-processing step, instead of covariant cloning also other cloning methods, like Poisson or other PDE-based cloning approaches may be used.

For initializing the exposed area, instead of the median filter also interpolation algorithms or parametric texture synthesis methods may be used.

The patch-based texture synthesis method may e.g. be replaced by pixel-based or parametric texture synthesis methods.

Instead of the present filling sequence, also other, for example, determined filling sequences may be used, like e.g. spiral shaped filling of the unknown region without prioritizing.

Three primary technical fields of application result.

The first one are auto stereoscopic displays. Auto stereoscopic displays currently emit 5, 8, 9 or 22 different views of a scene from slightly shifted angles of views simultaneously. If only a smaller number of views exists than required by the display, the missing ones have to be generated using the existing views.

Another main field of application is encoding of multiview videos. With multiview videos, the bit rate savings may be increased if only a limited number of views is transmitted and at the decoder the missing ones are synthesized again using the original views.

A third main field of application is generating stereoscopic sequences using a 2-dimensional video sequence.

Using a mono sequence a further view shifted regarding its position may be calculated. Here, areas in the image are exposed regarding which no information exists. These areas have to be synthesized using existing image information.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

List of references

[1] ReferencesChristoph Fehn, René de la Barre, and Siegmund Pastoor:Interactive 3-DTV-Concepts and Key Technologies,Proceedings of the IEEE, Vol. 94, No. 3, March 2006.

[2] Oliver Schreer, Peter Kauff, and Thomas Sikora:3D Video Communication: Algorithms, concepts and real-time systems in human centred communication,John Willey & Sons, ISBN-13 987-0-470-02271-9, 2005.

[3] Kwan-Jung Oh, Sehoon Yea, and Yo-Sung Ho:Hole Filling Method Using Depth Based In-Painting For View Synthesis in Free Viewpoint Television and 3-D Video,Proceedings of Picture Coding Symposium (PCS), Chicago, USA, May 2009.

[4] C. Lawrence Zitnik, Sing B. Kang, Matthew Uyttendaele, Simon Winder, and Richard Szeliski:High-Quality Video View Interpolation Using a Layered Representation,Proceedings of ACM Transactions on Graphics on Graphics (SIGGRAPH), Los Angeles, USA, August 2004.

[5] Sveta Zinger, Luat Do, P.H.N. de With:Free-viewpoint depth image based rendering,In Journal Visual Communication and Image Representation, Vol. 21, Issues 5-6, pp. 533-541,2010

[6] Alexandru Telea:An Image Inpainting Technique Based on the Fast Marching Method,International Journal of Graphics Tools, Vol. 9, No. 1, pp. 25-36, 2004.

[7] Marcelo Bertalmío, Guillermo Sapiro, Vicent Caselles, and Coloma Ballester:Image Inpainting,Proceedings of ACM Transactions on Graphics (SIGGRAPH), New Orleans, USA, 2000.

[8] http://www.philips.de.

[9] William R. Mark:Post-rendering 3-D image warping: Visibility, reconsruction, and performance for depth-image warping,Ph.D. Dissertation, Univ. North Carolina, 1999.

[10] Wan-Yu Chen, Yu-Lin Chang, Shyh-Feng Lin, Li-Fu Ding, and Liang-Gee Chen:Efficient depth image based rendering with edge dependent depth filter and interpolation,Proceedings of IEEE International Conference on Multimedia and Expo, Amsterdam, Holland, July 2005.

[11] Christoph Fehn:Depth-Image-Based Rendering (DIBR), Compression and Transmission for a New Approach on 3D TV,Proceedings of SPIE Stereoscopic Displays and Virtual Reality Systems XI, San Jose, USA, January 2004 (Invited Paper).

[12] Liang Zhang and Wa James Tamm:Stereoscopic image generation based on depth images for 3D TV,IEEE Transactions on Broadcasting, Vol. 51, No. 2, pp 191-199, 2005.

[13] A. Smolic, K. Müller, and A. Vetro, "Development of a New MPEG Standard for Advanced 3D Video Applications," In Proc. of IEEE Int. Symp. on Image Signal Processing and Analysis (ISPA '09), Salzburg, Austria, September 2009.

[14] C.-M. Cheng, S.-J. Lin, S.-H- Lai, and J.-C. Yang, "Improved Novel View Synthesis from Depth Image with Large Baseline," In Proc. of Int. Conf. on Pattern Recognition (ICPR '08), Tampa, USA, December 2008.

[15] A. Criminisi, P. Perez, and K. Toyama, "Region Filling and Object Removal by Exemplar-based Inpainting," In IEEE Trans. on Image Proc. vol. 13, no. 9, pp. 1200-1212, January 2004.

[16] J. Hayes, A. Efros, "Scene Completion Using Millions of Photographs," In Proc. of ACMSIGGRAPH, San Diego, USA, August 2007.

[17] G. Doretto, A. Chiuso, Y. N. Wu, and S. Soatto, "Dynamic Textures," In Int. Journal of Com. Vision, pp. 91-109, February 2004.

[18] P. Ndjiki-Nya, M. Köppel, D. Doshkov, T. Wiegand, "Automatic Structure-Aware Inpainting for Complex Image Content," In Proc. of Int. Sym. on Visual Computing, Las Vegas, USA, December 2009.

[19] L.-Y. Wei, S. Lefebvre, V. Kwatra, and G. Turk, "State of the Art in Example-based Texture Synthesis," In Proc. of EUROGRAPHICS 2009, State of the Art Report, EG-Star, Munich, Germany, 2009.

[20] M.Tanimoto, T. Fujii, and K. Suzuki," Depth Estimation Reference Software (DERS) 5.0," ISO/IEC JTC1/SC29/WG11 M16923, Lausanne, Switzerland, October 2009.

[21] P. Perez, M. Gangnet, and A. Blake, "Poisson Image Editing," In Proc. of ACM SIGGRAPH, San Diego, USA, July 2003.

[22] H. Lakshman, M. Köppel, P. Ndjiki-Nya, and T. Wiegand, "Image Recovery using Sparse Reconstruction Based Texture Refinement," In Proc of IEEE Int. Conf on Acoustic Speech and Signal Proc., Dallas, USA, March 2010.

[23] T.G. Georgiev, "Covariant Derivates and Vision," In Proc. Europ. Conf. on Comp. Vision (ECCV), Graz, Austria, 2006

[24] Z. Wang, A.C. Bovik, H.R. Sheikh and E.P. Simoncelli, "Image Quality Assesment: From Error Visibility to Structural Similarity," In IEEE Trans. on Image Proc, vol. 13, no. 4, pp. 600-612, April 2004.

[25] M. Tanimoto, T. Fujii, and K. Suzuki, "View Synthesis Algorithm in View Synthesis Reference Software 2.0 (VSRS 2.0)," ISO/IEC JTC1/SC29/WG11 M16090, Lausanne, Switzerland, February 2008.

[26] I. Daribo, "Coding and rendering of 3D video sequences and applications to Three-Dimensional Television (3DTV) and Free Viewpoint Television (FTV)", Doctoral Thesis at Graduate College of Telecom ParisTech, 2009

## Claims

1. Apparatus for filling a disoccluded area in a virtual view image by patch-based texture synthesis wherein the patch-based texture synthesis is responsive to a depth/disparity map (38) associated with the virtual view image (28), the apparatus being **characterised by** a background detector (62) configured to separate the virtual view image into a background portion and a foreground portion thereof, based on the depth/disparity information; and a texture filler (60) configured to fill at least a portion of the disoccluded area with texture information by the patch-based texture synthesis, wherein the texture filler is configured to, in filling the at least one portion, pre-estimate texture information within the at least one portion by, for a predetermined location within the at least one portion, locally determining a central tendency of a distribution of the texture information of the background portion of the virtual view image and assigning a texture value of the central tendency to the predetermined location, and patching the at least one portion by texture patches with registering and/or selecting the texture patches considering both the background portion of the virtual view image surrounding the at least one portion and the pre-estimated texture information within the at least one portion, but disregarding the foreground portion of the virtual view image.

2.  Apparatus according to claim 1, comprising
    a depth/disparity filler (50) configured to fill the depth/disparity map (38) of the virtual view image (28) within the disoccluded area (26') thereof by extrapolating depth/disparity information of the depth/disparity map (38) of the virtual view image (28) extending along a portion of a circumference of the disoccluded area (26') of the virtual view image (28) bordering the background portion (36') of the virtual view image (28) into the disoccluded area (26') of the virtual view image (28), and
    a texture filler (60) configured to fill at least a portion of the disoccluded area (26) with texture information by the patch-based texture synthesis, using the depth/disparity map (38) of the virtual view image (28) within the disoccluded area.

3.  Apparatus according to claim 2, wherein the depth/disparity filler (50) is configured to filter, before extrapolation, the depth/disparity information by, for a predetermined location, locally determining a background centroid and a foreground centroid in a local statistical distribution of the depth/disparity information, maintaining the depth/disparity information at the predetermined location in case same belongs to the background centroid and changing the depth/disparity information at the predetermined location to correspond to a depth/disparity value of the background centroid, in case the depth/disparity information belongs to the foreground centroid.

4.  Apparatus according to any of claims 1 to 3, comprising
    a texture filler (60) configured to fill at least a portion of the disoccluded area (26) with texture information by the patch-based texture synthesis with using a patch filling order (49b) according to which the patch-based texture synthesis starts from a portion (46) of the circumference of the at least one portion of the disoccluded area, bordering deeper parts of the depth/disparity map, towards a portion of the circumference of the at least one portion of the disoccluded area, bordering more frontal parts of the depth/disparity map.

5.  Apparatus according to any of claims 1 to 4, comprising
    a post-processor (64) configured to post-process the texture information within the at least one portion as obtained by the patch-based texture synthesis, by seamless cloning with using texture information of the background portion of the virtual view image surrounding the disoccluded area, as part of a boundary region, to which the seamless cloning adjusts colors of the texture information within the at least one portion, and disregarding the foreground portion of the virtual view image as far as the boundary region is concerned.

6.  Apparatus according to any of claims 1 to 5, wherein the background detector is configured to determine the background portion by statistically evaluating a distribution of depth/disparity sample values of the depth/disparity map to obtain a depth/disparity threshold and assigning portions of the first virtual view image to the background portion where depth/disparity sample values have a predetermined relationship to the depth/disparity threshold.

7.  Apparatus according to any of claim 1 to 6, further comprising
    a filler (34) configured to fill the disoccluded area (26) of the virtual view image (28) of the virtual view video (12) based on a corresponding portion (26) of a background sprite image (24) .

8.  Apparatus according to any of claims 1 to 7, further comprising an updater (22) configured to update the background sprite image (24) based on the background portion (36) of the virtual view image (28).

9.  Apparatus according to claim 7, wherein the filler (34) is configured to fill a first portion of the disoccluded area (26) of the virtual view image (28) by copying, within the first portion, the background sprite image (24) into the virtual view image (28), and fill a second hole (46) of the disoccluded area of the virtual view image, not covered by the first portion, by texture synthesis.

10. Apparatus according claim 9, wherein the filler (34) is configured to post-process the texture information within the second hole (44) as obtained by the texture synthesis, by seamless cloning with using surrounding texture information from the background portion (36) of the virtual view image (28) and the first portion of the disoccluded area (26) of the virtual view image (28), as a boundary region, to which the seamless cloning adjusts colors of the texture information within the second hole (44), and with ignoring the texture information of the foreground portion (40) of the virtual view image (28).

11. Method for filling a disoccluded area in a virtual view image by patch-based texture synthesis **characterized in that** the patch-based texture synthesis is responsive to a depth/disparity map associated with the virtual view image, the method being **characterised by** separating the virtual view image into a background portion and a foreground portion thereof, based on the depth/disparity information; and

filling at least a portion of the disoccluded area with texture information by the patch-based texture synthesis, wherein the filling the at least one portion comprises pre-estimating texture information within the at least one portion by, for a predetermined location within the at least one portion, locally determining a central tendency of a distribution of the texture information of the background portion of the virtual view image and assigning a texture value of the central tendency to the predetermined location, and patching the at least one portion by texture patches with registering and/or selecting the texture patches considering both the background portion of the virtual view image surrounding the at least one portion and the pre-estimated texture information within the at least one portion, but disregarding the foreground portion of the virtual view image.

12. Computer readable digital storage medium having stored thereon a computer program having a program code for performing, when running on a computer, a method according to claim 11.

13. Computer program having a program code for performing, when running on a computer, a method according to claim 11.

## Patentansprüche

1. Vorrichtung zum Füllen eines deokkludierten Bereiches in einem Virtuelle-Ansicht-Bild durch eine Patch-basierte Textursynthese, wobei die Patch-basierte Textursynthese auf eine Tiefe/Disparität-Karte (38) anspricht, die mit dem Virtuelle-Ansicht-Bild (28) in Verbindung steht,
wobei die Vorrichtung durch folgende Merkmale gekennzeichnet ist:

   einen Hintergrunddetektor (62), der dazu ausgebildet ist, das Virtuelle-Ansicht-Bild auf der Basis der Tiefe/Disparität-Informationen in einen Hintergrundabschnitt und einen Vordergrundabschnitt desselben zu teilen; und
   einen Texturfüller (60), der dazu ausgebildet ist, durch die Patch-basierte Textursynthese zumindest einen Abschnitt des deokkludierten Bereiches mit Texturinformationen zu füllen, wobei der Texturfüller dazu ausgebildet ist, beim Füllen des zumindest einen Abschnittes Texturinformationen in dem zumindest einen Abschnitt vorab zu schätzen, durch lokales Bestimmen, für eine vorbestimmte Stelle in dem zumindest einen Abschnitt, einer zentralen Tendenz einer Verteilung der Texturinformationen des Hintergrundabschnittes des Virtuelle-Ansicht-Bildes und Zuweisen eines Texturwertes der zentralen Tendenz zu der vorbestimmte Stelle und Patchen des zumindest einen Abschnittes durch Textur-Patches, wobei die Textur-Patches unter Berücksichtigung sowohl des Hintergrundabschnittes des Virtuelle-Ansicht-Bildes, der den zumindest einen Abschnitt umgibt, als auch der vorab geschätzten Texturinformationen in dem zumindest einen Abschnitt registriert und/oder ausgewählt werden, wobei jedoch der Vordergrundabschnitt des Virtuelle-Ansicht-Bildes ignoriert wird.

2. Vorrichtung gemäß Anspruch 1, die folgende Merkmale aufweist:

   einen Tiefe/Disparität-Füller (50), der dazu ausgebildet ist, die Tiefe/Disparität-Karte (38) des Virtuelle-Ansicht-Bildes (28) in dem deokkludierten Bereich (26') desselben zu füllen, durch Extrapolieren von Tiefe/Disparität-Informationen der Tiefe/Disparität-Karte (38) des Virtuelle-Ansicht-Bildes (28), die sich entlang eines Abschnittes eines Umfangs des deokkludierten Bereiches (26') des Virtuelle-Ansicht-Bildes (28), der an den Hintergrundabschnitt (36') des Virtuelle-Ansicht-Bildes (28) angrenzt, in den deokkludierten Bereich (26') des Virtuelle-Ansicht-Bildes (28) erstreckt, und
   einen Texturfüller (60), der dazu ausgebildet ist, unter Verwendung der Tiefe/Disparität-Karte (38) des Virtuelle-Ansicht-Bildes (28) in dem deokkludierten Bereich zumindest einen Abschnitt des deokkludierten Bereiches (26) durch die Patch-basierte Textursynthese mit Texturinformationen zu füllen.

3. Vorrichtung gemäß Anspruch 2, bei der der Tiefe/Disparität-Füller (50) dazu ausgebildet ist, vor der Extrapolation die Tiefe/Disparität-Informationen zu filtern, durch lokales Bestimmen, für eine vorbestimmte Stelle, eines Hintergrundschwerpunktes und eines Vordergrundschwerpunktes in einer lokalen statistischen Verteilung der Tiefe/Disparität-Informationen, Beibehalten der Tiefe/Disparität-Informationen an der vorbestimmten Stelle, falls dieselben zu dem Hintergrundschwerpunkt gehören, und Ändern der Tiefe/Disparität-Informationen an der vorbestimmten Stelle dahingehend, einem Tiefe/Disparität-Wert des Hintergrundschwerpunktes zu entsprechen, falls die Tiefe/Disparität-Informationen zu dem Vordergrundschwerpunkt gehören.

4. Vorrichtung gemäß einem der Ansprüche 1 bis 3, die folgende Merkmale aufweist:
einen Texturfüller (60), der dazu ausgebildet ist, zumindest einen Abschnitt des deokkludierten Bereiches (26) durch die Patch-basierte Textursynthese mit Texturinformationen zu füllen, wobei eine Patch-Füllreihenfolge (49b) verwendet wird, gemäß der die Patch-basierte Textursynthese von einem Abschnitt (46) des Umfanges des zumindest einen Abschnitt des deokkludierten Bereiches beginnt, der an tiefere Teile der Tiefe/Disparität-Karte angrenzt, hin zu einem Abschnitt des Umfanges des zumindest einen Abschnittes des deokkludierten Bereiches, der an frontalere Teile der Tiefe/Disparität-Karte angrenzt.

5. Vorrichtung gemäß einem der Ansprüche 1 bis 4, die folgende Merkmale aufweist:
einen Nachbearbeiter (64), der dazu ausgebildet ist, die Texturinformationen in dem zumindest einen Abschnitt wie durch die Patch-basierte Textursynthese erhalten durch nahtloses Klonen nachzubearbeiten, wobei Texturinformationen des Hintergrundabschnittes des Virtuelle-Ansicht-Bildes, der den deokkludierten Bereich umgibt, als Teil einer Grenzregion, an die das nahtlose Klonen Farben der Texturinformationen in dem zumindest einen Abschnitt anpasst, verwendet werden und der Vordergrundabschnitt des Virtuelle-Ansicht-Bildes in Bezug auf die Grenzregion ignoriert wird.

6. Vorrichtung gemäß einem der Ansprüche 1 bis 5, wobei der Hintergrunddetektor dazu ausgebildet ist, den Hintergrundabschnitt zu bestimmen, durch statistisches Evaluieren einer Verteilung von Tiefe/Disparität-Abtastwerten der Tiefe/Disparität-Karte, um eine Tiefe/Disparität-Schwelle zu erhalten, und Zuweisen von Abschnitten des ersten Virtuelle-Ansicht-Bildes zu dem Hintergrundabschnitt, wo Tiefe/Disparität-Abtastwerte eine vorbestimmte Beziehung zu der Tiefe/Disparität-Schwelle aufweisen.

7. Vorrichtung gemäß einem der Ansprüche 1 bis 6, die ferner folgende Merkmale aufweist:
einen Füller (34), der dazu ausgebildet ist, den deokkludierten Bereich (26) des Virtuelle-Ansicht-Bildes (28) des Virtuelle-Ansicht-Videos (12) auf der Basis eines entsprechenden Abschnittes (26) eines Hintergrund-Sprite-Bildes (24) zu füllen.

8. Vorrichtung gemäß einem der Ansprüche 1 bis 7, die ferner einen Aktualisierer (22) aufweist, der dazu ausgebildet ist, das Hintergrund-Sprite-Bild (24) auf der Basis des Hintergrundabschnittes (36) des Virtuelle-Ansicht-Bildes (28) zu aktualisieren.

9. Vorrichtung gemäß Anspruch 7, wobei der Füller (34) dazu ausgebildet ist, einen ersten Abschnitt des deokkludierten Bereiches (26) des Virtuelle-Ansicht-Bildes (28) durch Kopieren, in dem ersten Abschnitt, des Hintergrund-Sprite-Bildes (24) in das Virtuelle-Ansicht-Bild (28) zu füllen, und ein zweites Loch (46) des deokkludierten Bereiches des Virtuelle-Ansicht-Bildes, das nicht durch den ersten Abschnitt bedeckt ist, durch Textursynthese zu füllen.

10. Vorrichtung gemäß Anspruch 9, bei der der Füller 34 dazu ausgebildet ist, die Texturinformationen in dem zweiten Loch (44) wie durch die Textursynthese erhalten nachzubearbeiten, durch nahtloses Klonen, wobei umgebene Texturinformationen aus dem Hintergrundabschnitt (36) des Virtuelle-Ansicht-Bildes (28) und des ersten Abschnittes des deokkludierten Bereiches (26) des Virtuelle-Ansicht-Bildes (28), als eine Grenzregion, an die das nahtlose Klonen Farben der Texturinformationen in dem zweiten Loch (44) anpasst, verwendet werden und wobei die Texturinformationen des Vordergrundabschnittes (40) des Virtuelle-Ansicht-Bildes (28) ignoriert werden.

11. Verfahren zum Füllen eines deokkludierten Bereiches in einem Virtuelle-Ansicht-Bild durch Patch-basierte Textursynthese, **dadurch gekennzeichnet, dass** die Patch-basierte Textursynthese auf eine Tiefe/Disparität-Karte anspricht, die mit dem Virtuelle-Ansicht-Bild in Verbindung steht,
wobei das Verfahren durch folgende Schritte gekennzeichnet ist:

Teilen des Virtuelle-Ansicht-Bildes auf der Basis der Tiefe/Disparität-Informationen in einen Hintergrundabschnitt und einen Vordergrundabschnitt desselben; und
Füllen zumindest eines Abschnitts des deokkludierten Bereiches mit Texturinformationen durch die Patch-basierte Textursynthese, wobei das Füllen des zumindest einen Abschnittes das Vorabschätzen von Texturinformationen in dem zumindest einen Abschnitt aufweist, durch lokales Bestimmen, für eine vorbestimmte Stelle in dem zumindest einen Abschnitt, einer zentralen Tendenz einer Verteilung der Texturinformationen des Hintergrundabschnittes des Virtuelle-Ansicht-Bildes und Zuweisen eines Texturwertes der zentralen Tendenz zu der vorbestimmte Stelle und Patchen des zumindest einen Abschnittes durch Textur-Patches, wobei die Textur-Patches unter Berücksichtigung sowohl des Hintergrundabschnittes des Virtuelle-Ansicht-Bildes, der den zumindest einen Abschnitt umgibt, als auch der vorab geschätzten Texturinformationen in dem zumindest einen Abschnitt registriert und/oder ausgewählt werden, wobei jedoch der Vordergrundabschnitt des Virtuelle-Ansicht-Bildes ignoriert wird.

**12.** Computer-lesbares digitales Speichermedium, auf dem ein Computerprogramm mit einem Programmcode zum Ausführen, wenn derselbe auf einem Computer abläuft, eines Verfahrens gemäß Anspruch 11 gespeichert ist.

**13.** Computerprogramm mit einem Programmcode zum Ausführen, wenn derselbe auf einem Computer abläuft, eines Verfahrens gemäß Anspruch 11.

## Revendications

**1.** Appareil pour remplir une zone de désocclusion dans une image de vue virtuelle par synthèse de texture à base de patch, où la synthèse de texture à base de patch réagit à une carte de profondeur/disparité (38) associée à l'image de vue virtuelle (28),
l'appareil étant **caractérisé par**
un détecteur d'arrière-plan (62) configuré pour séparer l'image de vue virtuelle en une partie d'arrière-plan et une partie d'avant-plan de cette dernière, sur base des informations de profondeur/ disparité; et
un remplisseur de texture (60) configuré pour remplir au moins une partie de la zone de désocclusion par des informations de texture par la synthèse de texture à base de patch, où le remplisseur de texture est configuré pour pré-estimer, lors du remplissage de l'au moins une partie, les informations de texture dans l'au moins une partie en déterminant localement, pour un emplacement prédéterminé dans l'au moins une partie, une tendance centrale d'une distribution des informations de texture de la partie de fond de l'image de vue virtuelle et en attribuant une valeur de texture de la tendance centrale à l'emplacement prédéterminé, et pour patcher l'au moins une partie par des patchs de texture tout en enregistrant et/ou sélectionnant les patchs de texture en tenant compte tant de la partie d'arrière-plan de l'image de vue virtuelle entourant l'au moins une partie et des informations de texture pré-estimées dans l'au moins une partie, mais en ignorant la partie d'avant-plan de l'image de vue virtuelle.

**2.** Appareil selon la revendication 1, comprenant
un remplisseur de profondeur/disparité (50) configuré pour remplir la carte de profondeur/disparité (38) de l'image de vue virtuelle (28) dans la zone de désocclusion (26') de cette dernière en extrapolant les informations de profondeur/disparité de la carte de profondeur/disparité (38) de l'image de vue virtuelle (28) s'étendant le long d'une partie de la circonférence de la zone de désocclusion (26') de l'image de vue virtuelle (28) bordant la partie d'arrière-plan (36') de l'image de vue virtuelle (28) dans la zone de désocclusion (26') de l'image de vue virtuelle (28), et
un remplisseur de texture (60) configuré pour remplir au moins une partie de la zone de désocclusion (26) par des informations de texture par la synthèse de texture à base de patch, à l'aide de la carte de profondeur/disparité (38) de l'image de vue virtuelle (28) dans la zone de désocclusion.

**3.** Appareil selon la revendication 2, dans lequel le remplisseur de profondeur/ disparité (50) est configuré pour filtrer, avant extrapolation, les informations de profondeur/disparité en déterminant localement, pour un emplacement prédéterminé, un centroïde d'arrière-plan et un centroïde d'avant-plan dans une distribution statistique locale des informations de profondeur/ disparité, en maintenant les informations de profondeur/disparité à l'emplacement prédéterminé au cas où elles appartiennent au centroïde d'arrière-plan et en modifiant les informations de profondeur/ disparité à l'emplacement prédéterminé de manière à correspondre à une valeur de profondeur/disparité du centroïde d'arrière-plan au cas où les informations de profondeur/disparité appartiennent au centroïde d'avant-plan.

**4.** Appareil selon l'une quelconque des revendications 1 à 3, comprenant
un remplisseur de texture (60) configuré pour remplir au moins une partie de la zone de désocclusion (26) par des informations de texture par la synthèse de texture à base de patch à l'aide d'un ordre de remplissage de patch (49b) selon lequel la synthèse de texture à base de patch commence à partir d'une partie (46) de la circonférence de l'au moins une partie de la zone de désocclusion bordant des parties plus profondes de la carte de profondeur/ disparité vers une partie de la circonférence de l'au moins une partie de la zone de désocclusion bordant des parties plus frontales de la carte de profondeur/disparité.

**5.** Appareil selon l'une quelconque des revendications 1 à 4, comprenant
un post-processeur (64) configuré pour post-traiter les informations de texture dans l'au moins une partie obtenue par la synthèse de texture à base de patch, en clonant en continu tout en utilisant les informations de texture de la partie d'arrière-plan de l'image de vue virtuelle entourant la zone de désocclusion, comme partie d'une région limite, à laquelle le clonage continu ajuste les couleurs des informations de texture dans l'au moins une partie, et en ignorant la partie d'avant-plan de l'image de vue virtuelle en ce qui concerne la région limite.

6. Appareil selon l'une quelconque des revendications 1 à 5, dans lequel le détecteur d'arrière-plan est configuré pour déterminer la partie d'arrière-plan en évaluant statistiquement une distribution de valeurs d'échantillon de profondeur/disparité de la carte de profondeur/ disparité pour obtenir un seuil de profondeur/ disparité et en attribuant des parties de la première image de vue virtuelle à la partie d'arrière-plan où les valeurs d'échantillon de profondeur/disparité ont un rapport prédéterminé avec le seuil de profondeur/ disparité.

7. Appareil selon l'une quelconque des revendications 1 à 6, comprenant par ailleurs
un remplisseur (34) configuré pour remplir la zone de désocclusion (26) de l'image de vue virtuelle (28) de la vidéo de vue virtuelle (12) sur base d'une partie correspondante (26) d'une image de sprites d'arrière-plan (24).

8. Appareil selon l'une quelconque des revendications 1 à 7, comprenant par ailleurs un metteur à jour (22) configuré pour mettre à jour l'image de sprites d'arrière-plan (24) sur base de la partie d'arrière-plan (36) de l'image de vue virtuelle (28).

9. Appareil selon la revendication 7, dans lequel le remplisseur (34) est configuré pour remplir une première partie de la zone de désocclusion (26) de l'image de vue virtuelle (28) en copiant, dans la première partie, l'image de sprites d'arrière-plan (24) dans l'image de vue virtuelle (28), et pour remplir un deuxième trou (46) de la zone de désocclusion de l'image de l'image de vue virtuelle, non couvert par la première partie, par synthèse de texture.

10. Appareil selon la revendication 9, dans lequel le remplisseur (34) est configuré pour post-traiter les informations de texture dans le deuxième trou (44) obtenues par la synthèse de texture, en clonant en continu tout en utilisant les informations de texture environnantes de la partie d'arrière-plan (36) de l'image de vue virtuelle (28) et de la première partie de la zone de désocclusion (26) de l'image de vue virtuelle (28), comme région limite, à laquelle le clonage en continu ajuste les couleurs des informations de texture dans le deuxième trou (44), et en ignorant les informations de texture de la partie d'avant-plan (40) de l'image de vue virtuelle (28).

11. Procédé de remplissage d'une zone de désocclusion dans une image de vue virtuelle par synthèse de texture à base de patch, **caractérisé par le fait que** la synthèse de texture à base de patch réagit à une carte de profondeur/disparité associée à l'image de vue virtuelle,
le procédé étant **caractérisé par** le fait de séparer l'image de vue virtuelle en une partie d'arrière-plan et une partie d'avant-plan de cette dernière, sur base des informations de profondeur/disparité; et
remplir au moins une partie de la zone de désocclusion par des informations de texture par la synthèse de texture à base de patch, où le remplissage de l'au moins une partie comprend le fait de pré-estimer les informations de texture dans l'au moins une partie en déterminant localement, pour un emplacement prédéterminé dans l'au moins une partie, une tendance centrale d'une distribution des informations de texture de la partie d'arrière-plan de l'image de vue virtuelle et en attribuant une valeur de texture de la tendance centrale à l'emplacement prédéterminé, et en patchant l'au moins une partie par des patchs de texture tout en enregistrant et/ou en sélectionnant les patchs de texture en tenant compte tant de la partie d'arrière-plan de l'image de vue virtuelle entourant l'au moins une partie et des informations de texture pré-estimées dans l'au moins une partie, mais en ignorant la partie d'avant-plan de l'image de vue virtuelle.

12. Support de mémoire numérique lisible par ordinateur présentant, y mémorisé, un programme d'ordinateur présentant un code de programme pour réaliser, lorsqu'il est exécuté sur un ordinateur, un procédé selon la revendication 11.

13. Programme d'ordinateur présentant un code de programme pour réaliser, lorsqu'il est exécuté sur un ordinateur, un procédé selon la revendication 11.

FIG 1

FIG 2

FIG 3

FIG 4

FIG 5

FIG 6

depth map
(1..n) → depth map filling [70] → frame update [72] → hole initialisation [74] → texture synthesis [76] → filled frame (1..n)

textured image
(1..n) → BG sprite update [78]

FIG 7

FIG 8

(A)

(B)

(C)

(D)

(E)

(F)

FIG 9

FIG 9

FIG 9

FIG 10

book arrival camera 8 to camera 10

(A)

book arrival camera 8 to camera 10

(B)

FIG 11

EP 2 596 475 B1

book arrival camera 8 to camera 6

(C)

book arrival camera 8 to camera 6

(D)

FIG 11

EP 2 596 475 B1

book arrival camera 6 to camera 4

(E)

book arrival camera 6 to camera 4

(F)

Proposed Approach
---- MPEG Reference Software

FIG 11

EP 2 596 475 B1

(A)

(B)

(C)

(D)

(E)

(F)

FIG 12

(A)

(B)

(C)

(D)

(E)

(F)

FIG 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **REFERENCESCHRISTOPH FEHN ; RENÉ DE LA BARRE ; SIEGMUND PASTOOR.** Interactive 3-DTV-Concepts and Key Technologies. *Proceedings of the IEEE,* March 2006, vol. 94 (3
- **OLIVER SCHREER ; PETER KAUFF ; THOMAS SIKORA.** 3D Video Communication: Algorithms, concepts and real-time systems in human centred communication. John Willey & Sons, 2005
- **KWAN-JUNG OH ; SEHOON YEA ; YO-SUNG HO.** Hole Filling Method Using Depth Based In-Painting For View Synthesis in Free Viewpoint Television and 3-D Video. *Proceedings of Picture Coding Symposium (PCS),* May 2009
- **C. LAWRENCE ZITNIK ; SING B. KANG ; MATTHEW UYTTENDAELE ; SIMON WINDER ; RICHARD SZELISKI.** High-Quality Video View Interpolation Using a Layered Representation. *Proceedings of ACM Transactions on Graphics on Graphics (SIGGRAPH),* August 2004
- **SVETA ZINGER ; LUAT DO ; P.H.N. DE WITH.** Free-viewpoint depth image based rendering. *In Journal Visual Communication and Image Representation,* 2010, vol. 21 (5-6), 533-541
- **ALEXANDRU TELEA.** An Image Inpainting Technique Based on the Fast Marching Method. *International Journal of Graphics Tools,* 2004, vol. 9 (1), 25-36
- **MARCELO BERTALMÍO ; GUILLERMO SAPIRO ; VICENT CASELLES ; COLOMA BALLESTER.** Image Inpainting. *Proceedings of ACM Transactions on Graphics (SIGGRAPH),* 2000
- Post-rendering 3-D image warping: Visibility, reconsruction, and performance for depth-image warping. **WILLIAM R. MARK.** Ph.D. Dissertation. Univ. North Carolina, 1999
- **WAN-YU CHEN ; YU-LIN CHANG ; SHYH-FENG LIN ; LI-FU DING ; LIANG-GEE CHEN.** Efficient depth image based rendering with edge dependent depth filter and interpolation. *Proceedings of IEEE International Conference on Multimedia and Expo,* July 2005
- **CHRISTOPH FEHN.** Depth-Image-Based Rendering (DIBR), Compression and Transmission for a New Approach on 3D TV. *Proceedings of SPIE Stereoscopic Displays and Virtual Reality Systems XI,* January 2004

- **LIANG ZHANG ; WA JAMES TAMM.** Stereoscopic image generation based on depth images for 3D TV. *IEEE Transactions on Broadcasting,* 2005, vol. 51 (2), 191-199
- **A. SMOLIC ; K. MÜLLER ; A. VETRO.** Development of a New MPEG Standard for Advanced 3D Video Applications. *Proc. of IEEE Int. Symp. on Image Signal Processing and Analysis (ISPA '09),* September 2009
- **C.-M. CHENG ; S.-J. LIN ; S.-H- LAI ; J.-C. YANG.** Improved Novel View Synthesis from Depth Image with Large Baseline. *Proc. of Int. Conf. on Pattern Recognition (ICPR '08),* December 2008
- **A. CRIMINISI ; P. PEREZ ; K. TOYAMA.** Region Filling and Object Removal by Exemplar-based Inpainting. *In IEEE Trans. on Image Proc.,* January 2004, vol. 13 (9), 1200-1212
- **J. HAYES ; A. EFROS.** Scene Completion Using Millions of Photographs. *Proc. of ACMSIGGRAPH,* August 2007
- **G. DORETTO ; A. CHIUSO ; Y. N. WU ; S. SOATTO.** Dynamic Textures. *In Int. Journal of Com. Vision,* February 2004, 91-109
- **P. NDJIKI-NYA ; M. KÖPPEL ; D. DOSHKOV ; T. WIEGAND.** Automatic Structure-Aware Inpainting for Complex Image Content. *In Proc. of Int. Sym. on Visual Computing,* December 2009
- **L.-Y. WEI ; S. LEFEBVRE ; V. KWATRA ; G. TURK.** State of the Art in Example-based Texture Synthesis. *In Proc. of EUROGRAPHICS 2009, State of the Art Report, EG-Star,* 2009
- **M.TANIMOTO ; T. FUJII ; K. SUZUKI.** Depth Estimation Reference Software (DERS) 5.0. *ISO/IEC JTC1/SC29/WG11 M16923,* October 2009
- **P. PEREZ ; M. GANGNET ; A. BLAKE.** Poisson Image Editing. *Proc. of ACM SIGGRAPH,* July 2003
- **H. LAKSHMAN ; M. KÖPPEL ; P. NDJIKI-NYA ; T. WIEGAND.** Image Recovery using Sparse Reconstruction Based Texture Refinement. *In Proc of IEEE Int. Conf on Acoustic Speech and Signal Proc.,* March 2010
- **T.G. GEORGIEV.** Covariant Derivates and Vision. *In Proc. Europ. Conf. on Comp. Vision (ECCV),* 2006
- **Z. WANG ; A.C. BOVIK ; H.R. SHEIKH ; E.P. SIMONCELLI.** Image Quality Assesment: From Error Visibility to Structural Similarity. *In IEEE Trans. on Image Proc,* April 2004, vol. 13 (4), 600-612

- **M. TANIMOTO ; T. FUJII ; K. SUZUKI.** View Synthesis Algorithm in View Synthesis Reference Software 2.0 (VSRS 2.0). *ISO/IEC JTC1/SC29/WG11 M16090,* February 2008

- **I. DARIBO.** Coding and rendering of 3D video sequences and applications to Three-Dimensional Television (3DTV) and Free Viewpoint Television (FTV). *Doctoral Thesis at Graduate College of Telecom ParisTech,* 2009